Europäisches Patentamt

European Patent Office

Office européen des brevets

(19)

(11) Veröffentlichungsnummer : **0 093 182**
**B1**

(12) **EUROPÄISCHE PATENTSCHRIFT**

(45) Veröffentlichungstag der Patentschrift :.
10.09.86

(21) Anmeldenummer : 82103675.3

(22) Anmeldetag : 29.04.82

(51) Int. Cl.⁴ : **H 02 P 6/02**

(54) Verfahren und Anordnung zur Konstantdrehzahlregelung von bürstenlosen Gleichstrommotoren.

(43) Veröffentlichungstag der Anmeldung :
09.11.83 Patentblatt 83/45

(45) Bekanntmachung des Hinweises auf die Patenterteilung : 10.09.86 Patentblatt 86/37

(84) Benannte Vertragsstaaten :
DE FR GB

(56) Entgegenhaltungen :
EP-A- 0 061 824
DE-B- 2 349 770
GB-A- 2 010 537
US-A- 4 270 074
IBM TECHNICAL DISCLOSURE BULLETIN, Band 19,
Nr. 10, März 1977, Seiten 3831, 3832, New York, USA,
S.D. KEIDL: "Speed· regulation for brushless DC
motors"
IBM TECHNICAL DISCLOSURE BULLETIN, Band 21,
Nr. 7, Dezember 1978, Seiten 2951, 2952, New York,
USA, S.D. KEIDL: "Dual-phase-locked brushless DC
motor velocity control"

(73) Patentinhaber : IBM DEUTSCHLAND GMBH
Pascalstrasse 100
D-7000 Stuttgart 80 (DE)
DE
International Business Machines Corporation
Old Orchard Road
Armonk, N.Y. 10504 (US)
FR GB

(72) Erfinder : Sakmann, Walter, Dipl.-Ing.
Beethovenstrasse 12
D-7033 Herrenberg (DE)
Erfinder : Zimmermann, Volker, Dipl.-Ing.
Banaterstrasse 51
D-7032 Sindelfingen (DE)

(74) Vertreter : Blutke, Klaus, Dipl.-Ing.
Schönaicher Strasse 220
D-7030 Böblingen (DE)

**Beschreibung**

Die Erfindung betrifft ein Verfahren zur Konstantdrehzahlregelung eines bürstenlosen Gleichstrommotors, dessen Polwicklungen zwischen ihren Kommutierungszeitpunkten eine gepulste Steuerspannung zugeführt wird und eine Anordnung zur Durchführung des Verfahrens.

Dieses verfahren kann insbesondere für den Antrieb von Typenzeichenbändern in Druckern Anwendung finden.

Bisher wurden für derartige Antriebe u. a. Synchronmotoren verwendet, um eine möglichst konstante Umlaufgeschwindigkeit des Typenträgerbandes zu gewährleisten. Äußere Einflüsse, z. B. die Reibung oder gleichzeitiges Anschlagen einer Vielzahl von Druckhämmern, konnten zu plötzlichen Abfällen der Geschwindigkeit des umlaufenden Bandes führen. Die auf Drehmomentenschwankungen basierenden Drehzahländerungen führten oft zu einem unerwünschten Schwingen, im Extremfall zu einem Stehenbleiben des Motors.

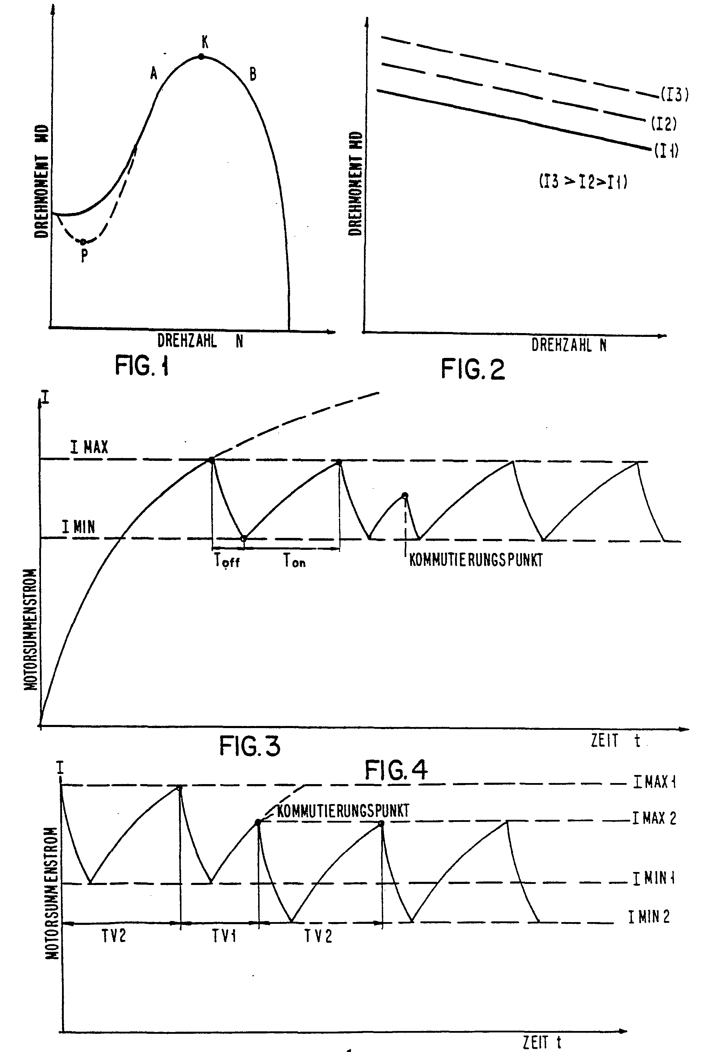

Bei Synchronmotoren ist bekanntlich die Geschwindigkeit durch die Netzfrequenz und die Polzahl bestimmt. Synchronmotoren weisen ein relativ schlechtes Drehmomentverhalten auf und sind bezüglich ihrer Geschwindigkeit nicht variabel regelbar. Ihre Drehmomentenkurve weist in ungünstigen Fällen gemäß Fig. 1 einen Sattelpunkt P auf ; in dem Bereich B, in dem der normale Betrieb erfolgt, ergeben sich bei Drehmomentenschwankungen Drehzahländerungen mit den daraus resultierenden, bereits erwähnten Nachteilen.

Zur Vermeidung dieses Nachteiles wurden bereits zum Antrieb von Banddruckern sogenannte kollektorlose oder bürstenlose Gleichstrommotoren verwendet. Ihre Drehmomentenkurve ist aus Fig. 2 zu ersehen : Eine Geschwindigkeitsregelung ist entweder über den Erregerstrom I (I1 < I2 < I3) bzw. über den Kommutierungswinkel möglich. Bei einer Regelung über den Erregerstrom I ergibt sich bei gleicher Geschwindigkeit ein besseres Drehmoment.

Im Vergleich zu Innenläufermotoren sind Außenläufermotoren wegen der hohen Masse bezüglich der bei Druckern auftretenden Stoßbelastung günstiger.

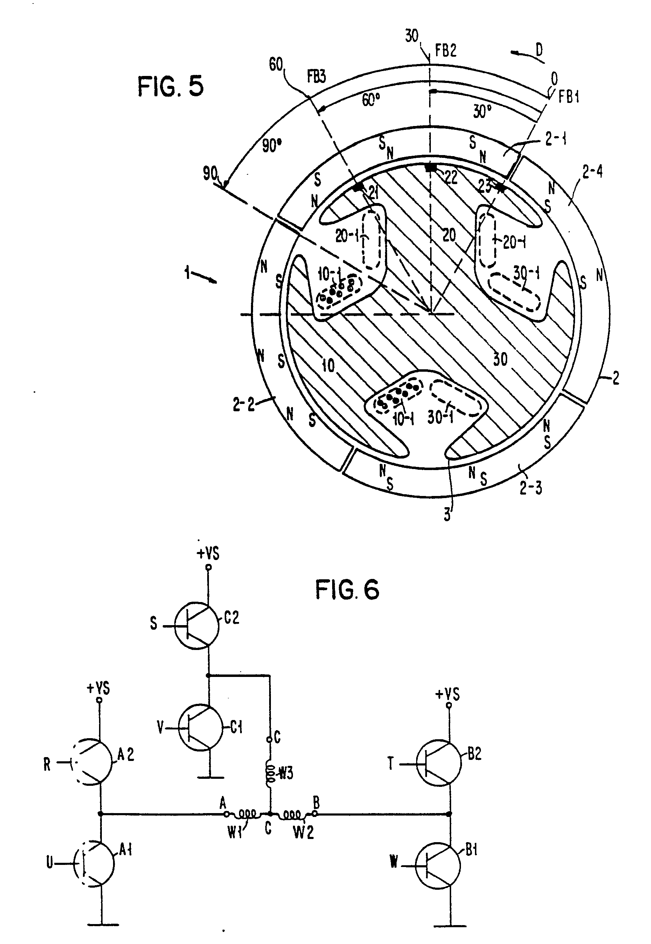

In Fig. 5 ist die Prinzipskizze eines als Außenläufermotors ausgeführten bürstenlosen Gleichstrommotors gezeigt. Zur prinzipiellen Wirkungsweise eines solchen Motors sei zunächst ausgesagt, daß der Außenläufer segmentartig aus einer Anzahl von z. B. 4 Stück Permanentmagneten (2-1, 2-2, 2-3 und 2-4) besteht, die sich an den feststehenden Polen (10, 20, 30) des innenliegenden Stators 3 vorbeibewegen. Die Pole des Stators werden durch entsprechende elektrische Wicklungen (Polwicklungen) magnetisiert. Durch die Kraftwirkung zwischen den Polen des Stators und den Permanentmagneten des Außenläufers ergibt sich dessen Fortbewegung in Pfeilrichtung D. Die Erregung der den einzelnen Polen des Stators zugeordneten Wicklungen erfolgt in einer bestimmten Kommutierungsfolge, um den gewünschten Antrieb des Außenläufers zu bewirken. Für eine solche Erregung ist es natürlich erforderlich, stets über Stellung des Außenläufers zum Stator, über die sogenannte Motordrehstellung, informiert zu sein. Diese Positionsinformation wird über sogenannte Hall-Effekt-Sensoren (21, 22, 23) ermittelt, die z. B. an einem Pol des Stators untergebracht sein können. Diese Sensoren liefern bei jeder Motordrehung elektrische Signale, von denen auf die mechanische Motordrehstellung geschlossen wird. Aus dieser Positionsinformation lassen sich Angaben ableiten, zu welchen Zeitpunkten die Kommutierungsschaltung (Fig. 6) zur Fortschaltung (Phasenumschaltung) der Erregung die Polwicklungen des Stators mit einem elektrischen Signal zu beaufschlagen hat.

Es ist bekannt, bei der Drehzahlregelung bürstenloser Gleichstrommotoren die momentane Drehzahl zu messen und mit einem Sollwert zu vergleichen. In Abhängigkeit dieses Vergleichsergebnisses wird dann die Motorerregung in bestimmter Weise vorgenommen, welche im folgenden Pulsbetrieb genannt sein soll. Das bedeutet, daß die Motorerregung während der einzelnen Kommutierungsphasen gemäß Fig. 3 einen sägezahnförmigähnlichen Verlauf hat, dieser Verlauf beruht darauf, daß die Polwicklungen des Motors während der Kommutierungsphase mit einer Pulsfolge beaufschlagt werden. Bedingt durch die Induktivität der Wicklungen ergeben sich somit Stromanstiege und Stromabfälle in einem Verlauf, der einer e-Funktion genügt. Nach Erreichen eines Maximalstromwertes Imax erfolgt während der sogenannten Pulsauszeit Toff ein Stromabfall bis auf den Wert Imin im Anschluß daran steigt der Motorsummenstrom während der Pulsanzeit Ton wieder auf den Maximalwert Imax an. Sollte während eines solchen Stromanstieges in einer Pulsanzeit eine Kommutierung erfolgen (siehe « Kommutierungspunkt » in Fig. 3) so tritt danach wieder ein Stromabfall bis auf den Wert Imin auf, während der weitere Stromverlauf wieder durch die für den Pulsbetrieb typischen den Ton- und Toff-Zeiten entsprechenden Stromsägezähne gekennzeichnet ist (bis zum Auftreten des nächsten Kommutierungspunktes).

Es sei an dieser Stelle bemerkt, daß sich durch entsprechende Wahl der Stromgrenzen Imax und Imin eine nahezu konstante Drehzahl unabhängig von Lastschwankungen erreichen läßt.

Drehzahlabweichungen werden einem Regler zugeführt, der gemäß Fig. 4 die Stromgrenzen Imin und Imax in Abhängigkeit von der Drehzahl anhebt oder absenkt. Falls die Drehzahl zu gering ist, werden die Stromgrenzen auf Imin 1 und Imax 1 angehoben ; oder auf Imin 2 oder Imax 2 abgesenkt, falls die Drehzahl zu hoch ist.

In Fig. 4 ist die aus der Strom-Aus- und Strom-An-Zeit gebildete Pulsperiode ohne Kommutierungseinfluß mit TV2 gekennzeichnet, während die aus der Puls-Aus-Zeit und der Stromanstiegszeit bis zum Kommutierungspunkt bestehende Steuerspannungspulsperiode mit TV1 bezeichnet ist. Aus dieser Darstellung geht hervor, daß die Zeit TV1 als Regelgröße benutzt wird, während die Zeit TV2 dazu dient den Durchschnittswert des Motorsummenstromes auf einem bestimmten Wert zu halten.

In bekannter Weise wird z. B. der Motorsummenstrom über den Spannungsabfall an einem Meßwiderstand gemessen. So ist in der deutschen Auslegeschrift 2 349 770 eine Anordnung zur getakteten Stromregelung eines kollektorlosen Gleichstrommotors beschrieben, bei der ein Widerstand zur Stromerfassung vorgesehen, welche für die Bestimmung der Puls-An-Zeiten Ton und der Puls-Aus-Zeiten Toff für den Pulsbetrieb wesentlich ist.

Mit anderen Worten : die Drehzahlregelung erfordert eine Kenntnis der Stromwerte, was jedoch mit Nachteilen verbunden ist : zum Nachregeln des Stromes werden Schaltkreise mit einem entsprechenden RC-Glied etc. verwendet. Dies macht jedoch das Nachregeln unvariabel, denn wenn bei anderen Drehzahlen nachgeregelt werden muß, ergibt ein solches RC-Glied andere Eigenschaften.

Ein solches System zur Drehzahlregelung ist in der deutschen Offenlegungsschrift 27 55 343 beschrieben. Bei dieser Drehzahlregelanordnung wird, abhängig von der jeweiligen Zeitdifferenz, zwischen den von der Motordrehzahl abhängigen Impulsabständen eines Impulszuges und der im wesentlichen konstanten Standzeit eines Zeitgliedes ein Signal erzeugt, dessen Größe charakteristisch für die Abweichung der Motordrehzahl von einem gewünschten Wert ist. Dabei wird jeweils ein Speicherglied nach einer vorgegebenen Gesetzmäßigkeit geladen und anschließend nach Ablauf mindestens eines Teils der Standzeit wieder entladen, wobei das Signal am Speicherglied als drehzahlabhängiges Signal für die Regelung dient. Das Speicherglied ist als Kondensator beschrieben, der über ein Ladeglied geladen wird, und dessen Ladespannung als drehzahlabhängiges Analogsignal dient.

Danach ist eine optimale Stromregelung nur dann möglich, wenn für jede Drehzahl (besser Drehzahländerung) entsprechende Regelglieder vorhanden sind, die eine enorme Komplexität des Regelschaltkreises bedingen würden.

Es ist deshalb zur Vermeidung dieses Nachteiles auch Aufgabe der Erfindung, ein Verfahren und eine Anordnung zur Konstantdrehzahlregelung von bürstenlosen Gleichstrommotoren anzugeben, bei dem auf eine Kenntnis der Stromwerte verzichtet werden kann.

Diese Aufgabe der Erfindung wird in vorteilhafter Weise durch die im kennzeichnenden Teil der Ansprüche 1 und 8 angegeben Maßnahmen gelöst.

Vorteilhafte Weiterbildungen der Erfindung sind den Unteransprüchen zu entnehmen.

Bei dem erfindungsgemäßen Verfahren erfolgt somit das Nachregeln nicht analog (ein von Schaltelementen abhängiges Verhalten ist deshalb nicht zu berücksichtigen), sondern digital lediglich unter Beachtung des Geschwindigkeitsverhaltens des Motors und unter Beachtung bestimmter Parameter.

Diesbezüglich hat man die Möglichkeit, einzelne Parameter entsprechend zu betonen, um eine schnelle optimale Stromnachregelung zu erhalten.

Aufgrund der Motorcharakteristik und aufgrund des Motorverhaltens in vorausgehenden Zeitabschnitten kann unter Kenntnis des Geschwindigkeitsverhaltens des Motors die Zeit TV1 gemäß Fig. 11 errechnet werden. Diese Zeit umfaßt die Stromabfallzeit TV3 an deren Anfang die Kommutierung erfolgt und die nachfolgende Stromanstiegszeit bis zu einem Zeitpunkt zu dem der Strom den Maximalwert Imax erreicht hat. Diesem Wert Imax entsprechen auch die Stromspitzen während des Pulsbetriebes ohne Kommutierung. Der Wert TV1 legt für eine bestimmte Drehzahl und für eine bestimmte Last den Stromanstieg fest. Durch die Vorgabe von TV1 soll ein Schwingen des Motors verhindert werden, welches immer dann auftreten kann, wenn es zu außerhalb des Bereiches Imin und Imax liegenden großen Stromabweichungen kommt.

Ein Ausführungsbeispiel der Erfindung ist in den Zeichnungen dargestellt und wird im folgenden näher beschrieben.

Es zeigen :

Figur 1   eine schematische Darstellung des Drehmoments als Funktion der Drehzahl bei Synchronmotoren,

Figur 2   eine schematische Darstellung des Drehmoments als Funktion der Drehzahl bei bürstenlosen Gleichstrommotoren,

Figur 3   eine Prinzipdarstellung zum Pulsen der Motorerregung unter Kenntnis der Stromwerte Imin und Imax,

Figur 4   eine schematische Darstellung des Pulsens der Motorerregung ohne Strommessung bei fehlender Synchronisation mit Kommutierung,

Figur 5   eine Prinzipskizze eines als Außenläufers ausgeführten bürstenlosen Gleichstrommotors,

Figur 6   eine Prinzipskizze einer Treiberschaltung für die Kommutierung des Motors gemäß Fig. 5,

Figur 7A und B   Impulsdiagramme zum Kommutieren des Motors gemäß Fig. 5 mit einer Treiberschaltung nach Fig. 6,

Figur 8   eine Prinzipskizze der Stromflußrichtung zur Phasenerregung des Motors gemäß Fig. 5 mit einer Treiberschaltung nach Fig. 6 während der Kommutierungsschritte 1 bis 6 wie in Fig. 7 und 9 angegeben.

Figur 9   eine Tabelle zur Speicherung der Positionssignale (FB1, FB2, FB3), der Kommutierungsschritte und der Steuersignale R, S, T, U, V, W für die Treiberschaltung.

Figur 10 eine schematische Darstellung eines « gepulsten » und eines « nichtgepulsten » Steuersignales für die Treiberschaltung und zwei auszugsweise vergrößerte Darstellungen von Steuerspannungspulsperioden.

Figur 11 eine schematische Darstellung des zeitlichen Verlaufes des gepulsten Motorsummenstromes mit verzögerter Synchronisation der Kommutierung.

Figur 12 eine Steuerschaltung mit Mikroprozessor zur Erzeugung der Steuersignale für die Motortreiberschaltung.

Figur 13 eine schematische Darstellung des zeitlichen Verlaufes des Mittelwertes des Motorsummenstromes bei unterschiedlichen Belastungsänderungen.

Figur 14 eine schematische Darstellung des sägezahnähnlichförmigen Verlaufes des gepulsten Motorsummenstromes während eines Zeitraumes, in dem keine Belastungsänderung des Motorantriebssystemes auftritt. Dabei nehmen die unteren Stromspitzen den Stromwert Null und der sich ergebende mittlere Motorsummenstrom den Wert ImitA an.

Figur 15 eine schematische Darstellung des zeitlichen Verlaufes des gepulsten Motorsummenstromes, bei dem zwischen einem auf den Wert Null erfolgten Motorstromabfall und den Beginn eines folgenden Motorstromanstieges eine Zeitspanne größer Null liegt.

In der Beschreibungseinleitung wurde bereits auf die Fig. 1 und Fig. 5 hingewiesen.

In Fig. 5 sind die Permanentmagnetsegmente 2-1, 2-2, 2-3 und 2-4 des Motors 1 nach außen hin durch eine gemeinsame Weicheisenglocke (nicht gezeichnet) umgeben. Die Orientierung der Permanentmagnete ist .durch die Bezeichnung ihres Nordpoles mit N und ihres Südpoles mit S angegeben. Die Wicklungen 10-1, 20-1, 30-1 der Magnetpole 10, 20, 30 des Stators 3 werden im folgenden mit W1, W2 und W3 bezeichnet. In der Fig. 5 sind radial verlaufende Positionslinien 0, 30, 60, 90 entsprechend einer diesem Auführungsbeispiel zugrundeliegenden 30°-Unterteilung angegeben. Aus Übersichtsgründen wurde auf die Darstellung weiterer Positionslinien verzichtet. Die Enden der Positionslinien 0, 30, 60 tragen eine aus zwei Buchstaben bestehende Kennzeichnung FB1, FB2, FB3. Diese Kennzeichnung gibt Aufschluß über die Erregung der einzelnen Wicklungen des Motors zu verschiedenen Zeitpunkten. Mit dieser Kennzeichnung sind auch die erst später beschriebenen Positionssignale 1, 2 und 3 bezeichnet.

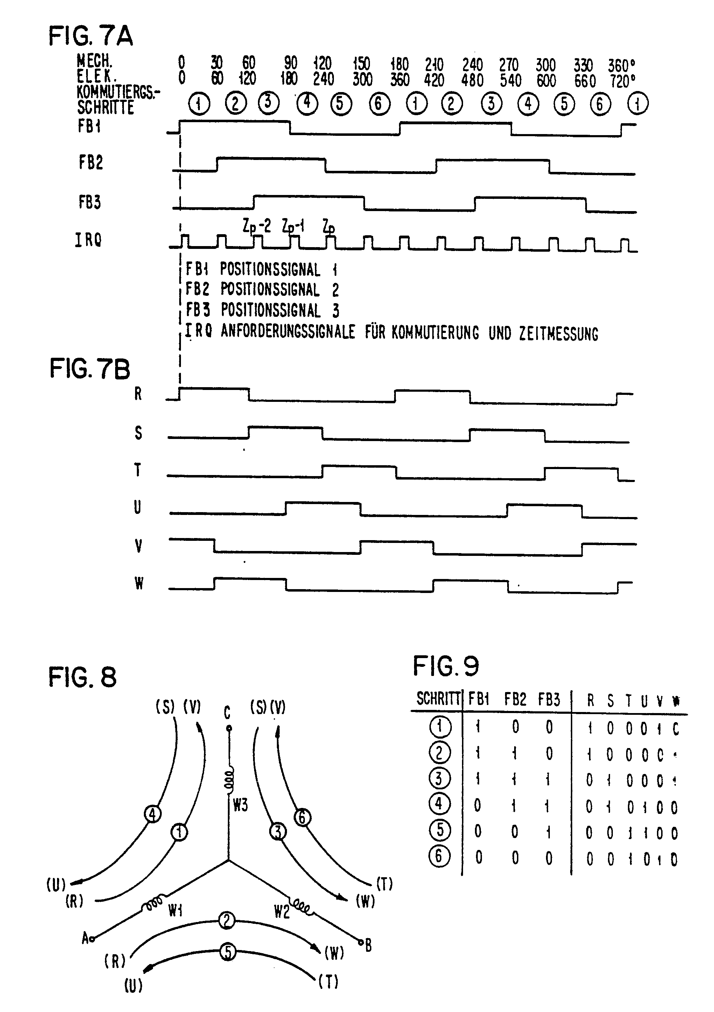

In Fig. 6 ist eine vereinfachte Prinzipdarstellung einer Treiberschaltung für die Kommutierung des Motors gemäß Fig. 5 gezeigt. Die Polwicklungen sind mit W1, W2 und W3 gekennzeichnet. Die Polwicklungen sind sternförmig zusammengeschaltet. Die äußere Klemme von W1 ist mit A, die von W2 mit B und die von W3 mit C gekennzeichnet. Diese Klemmen A, B und C werden durch die Treiberschaltung gemäß Fig. 6 zu bestimmten Zeitpunkten mit elektrischen Signalen beaufschlagt. Diese elektrischen Signale sind der Darstellung in Fig. 7B bzw. der Tabelle Fig. 9 zu entnehmen. Es sei schon jetzt darauf hingewiesen, daß während der einzelnen Kommutierungsschritte die Polwicklungen von einer gepulsten Steuerspannung beaufschlagt werden ; mit anderen Worten während eines Kommutierungsschrittes wird an die Klemmen entsprechender Polwicklungen eine Pulsfolge angelegt.

Aus Gründen der Vereinfachung sind in den Fig. 7 und 9 die entsprechenden Treibersteuersignale während der verschiedenen Kommutierungsschritte als ein gleichbleibendes Signal gezeichnet, um die Länge des Kommutierungsschrittes zu kennzeichnen und nicht den Pulsbetrieb, während der einzelnen Kommutierungsschritte.

Jeder Klemme A, B und C ist eine aus jeweils zwei Transistoren bestehende Schaltung zugeordnet Die Transistoren liegen dabei zwischen Masse und einer Versorgungsspannung + Vs in Serie. Der zwischen den Transistoren liegende Punkt ist mit dem jeweiligen Klemmenpunkt A, B und C verbunden. Die Transistoren werden durch eine binäre Steuerspannung an ihrer Basis in den leitenden oder gesperrten Zustand gesteuert. Die Transistoren der Schaltung für den Klemmenpunkt A sind mit A1 und A2 gekennzeichnet ; die für den Klemmenpunkt B mit B1 und B2 und die für den Klemmenpunkt C mit C1 und C2. Die Transistoren mit dem Index 1, also A1, B1 und C1, können auf Masse durchgeschaltet werden. Die Steuerspannung für den Transistor A1 ist mit U, die für den Transistor C1 mit V und die für den Transistor B1 mit W gekennzeichnet. Diese Steuerspannungen U, V und W werden während der einzelnen Kommutierungsschritte nicht gepulst.

Die Steuerspannungen für die Transistoren mit dem Index 2, also A2, B2 und C2 dienen dem Pulsen der Motorerregung.

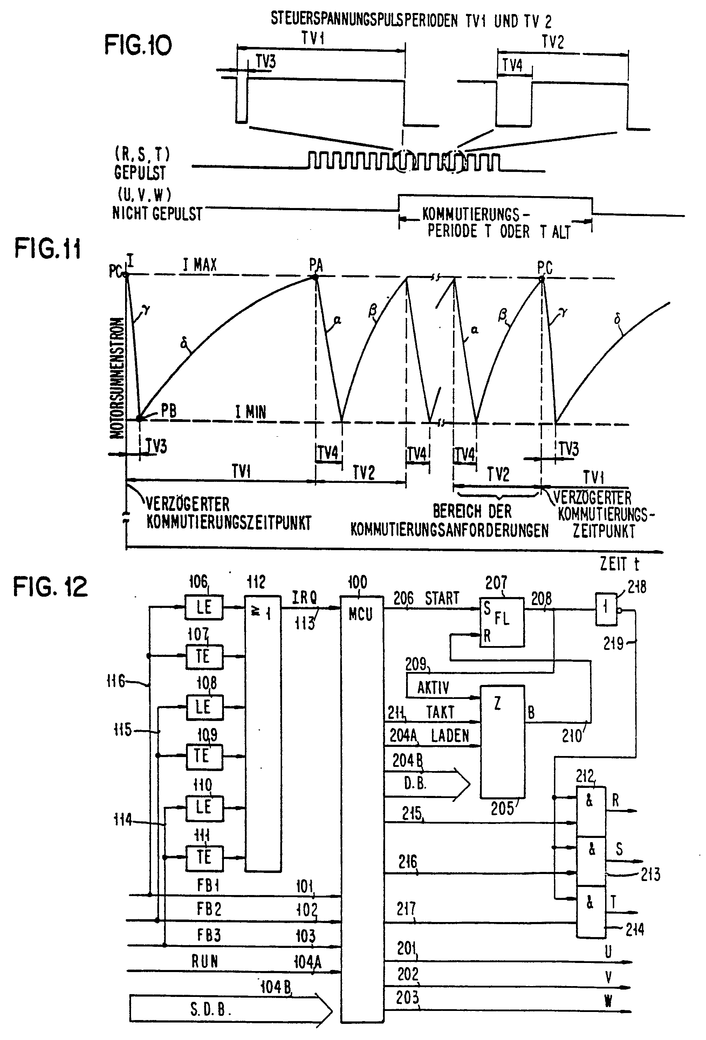

Gemäß der Darstellung in Fig. 10 stellen sich deshalb die Steuerspannungen dieser Transistoren während eines Kommutierungsschrittes als eine Folge von Rechteckimpulsen dar. Die Steuerspannung für den Transistor A2 ist mit R, die für den Transistor B2 mit T und die für den Transistor C2 mit S gekennzeichnet. Wird infolge der Steuerspannung R zeitweilig die Versorgungsspannung + VS durch den Transistor A2 durchgeschaltet, so entspricht die Spannung an der Klemme A dieser Versorgungsspannung, solange sich der Transistor A1 im gesperrten Zustand befindet. Ist der Transistor A1 hingegen leitend, so ist die Spannung an der Klemme A identisch mit dem Massepotential. Analoge Betrachtungen gelten für die Transistorschaltungen, die den Klemmenpunkten B und C zugeordnet sind.

Über die Zeitpunkte der Steuerung der einzelnen Transistoren A1, A2, B1, B2, C1, C2 gibt Fig. 7B Aufschluß. Dort sind in zeitlicher Relation zueinander die Verläufe der einzelnen Steuerspannungen R, S, T, U, V, W aufgezeichnet (wie bereits bemerkt, sind aus Vereinfachungsgründen die R, S, T Steuersignale in nichtgepulster Form dargestellt).

Die Darstellung in Fig. 7 in Verbindung mit Fig. 8 und 9 dient dazu, die Folge der einzelnen Kommutierungsschritte für die entsprechenden Polwicklungen (kurz Phasenerregung genannt) verständlich zu machen.

Als Abzisse der Darstellung in Fig. 7B erscheint die dem Verlauf der Zeit entsprechende mechanische Stellung des Außenläufers gegenüber dem Stator des Motors. Die Positionslinie 0 entspricht einem Drehwinkel von 0°, die Positionslinien 30 einer Drehung von 30°, die Positionslinie 60 einer Drehung um 60° usw. Diese Winkelstellungen 0°, 30°, 60° etc. entsprechen den sog. Kommutierungspunkten. Das sind jene Zeitpunkte, zu denen sich bezüglich der Steuerung der Transistoren A1, A2, B1, B2, C1 und C2 eine Änderung ergeben kann. Den mechanischen Kommutierungspunkten von 0 bis 360° sind in dem gewählten Ausführungsbeispiel die in Fig. 7A angegebenen elektrischen Kommutierungspunkte 0 bis 720° zugeordnet. Eine mechanische Drehung von 180° entspricht einer vollen elektrischen Periode von 360°, die sich für den Bereich der mechanischen Drehung von 180° bis 360° wiederholt. Wenn nicht ausdrücklich anders erwähnt, soll mit der Angabe eines Drehwinkels die mechanische Drehung gemeint sein. Der erste Kommutierungsschritt 1 reicht von der Drehung 0° bis 30°, der zweite Kommutierungsschritt 2 von 30 bis 60°, der dritte 3 von 60 bis 90° usw. Von den Transistoren A1, B1, C1 und A2, B2, C2 sind immer nur jeweils zwei leitend, und zwar einer mit dem Index 1 und einer mit dem Index 2 (Beispiel : während des Kommutierungsschrittes 1 ist der Transistor C1 mit der Steuerspannung V während des gesamten Kommutierungsschrittes leitend ; während der Transistor A2 gemäß seiner gepulsten Steuerspannung R leitend ist.) Aus Vereinfachungsgründen werden die Transistoren, die während eines Kommutierungsschrittes mit einer gepulsten Steuerspannung beaufschlagt werden auch als leitend bezeichnet (durch das Pulsen der Steuerspannung dieser Transistoren ergibt sich in Wirklichkeit auch nur ein gepulster Stromfluß während des entsprechenden Kommutierungsschrittes).

Ein direkter Kurzschluß der Versorgungsspannung + VS nach Masse ist nicht möglich, da sich die Eingangssignale eines Transistorpaares (z. B. A1/A2) nie überlappen.

Beispiel

In dem Bereich 0 bis 30° und 180 bis 210° öffnet R den Transistor A2, während der Transistor A1 durch U gesperrt bleibt. Während dieser Zeit wird die Versorgungsspannung + VS auf A durchgeschaltet und über die Wicklungen W1 und W3 der auf Masse liegenden Klemme C zugeführt. In dem betrachteten Bereich 0 bis 30° und 180 bis 210° liegt C auf Masse weil V den Transistor C1 durchschaltet. Da während des Drehwinkels 0 bis 30° bzw. 180 bis 210° der Transistor B2 durch T und der Transistor B1 durch W gesperrt ist, bleibt die Klemme B hochohmig. Mit anderen Worten, für den angegebenen Bereich liegt die Klemme B wegen des Spannungsteilers W1/W3 auf der halben Versorgungsspannung + VS/2. Die Versorgungsspannung fällt für diesen Bereich von der Klemme A über die beiden Wicklungen W1 und W2 auf die an Masse liegende Klemme B ab.

Wie bereits erwähnt, ist diese Erklärung vereinfacht, in Wirklichkeit hat die Steuerspannung R einen wie in Abbildung 10 dargestellten gepulsten Verlauf so daß sich für den angegebenen Drehbereich von 0 bis 30° bzw. 180 bis 210° (Kommutierungsschritt 1) eine gepulste Phasenerregung für die Wicklungen W1 und W3 ergibt. Pulsen bedeutet in diesem Zusammenhang, daß während eines entsprechenden Kommutierungsschrittes die Versorgungsspannung + VS nur im Takte der gepulsten Steuerspannung des Transistors der Polwicklungen durchgeschaltet wird. Die Steuerspannung U, V und W müssen nicht gepulst sein, da sie lediglich ein Durchschalten der ihnen entsprechenden Transistoren A1, B1 und C1 während der in Fig. 7B dargestellten Zeiten bewirken müssen.

Im folgenden sei erklärt, was unter Positionssignalen FB1, FB2 und FB3 und den IRQ-Anforderungssignalen für Kommutierung und Zeitmessung in Fig. 7A zu verstehen sei.

Es wurde bereits darauf hingewiesen, daß bei dem gewählten Ausführungsbeispiel des Motors nach Fig. 5 drei Hall-Effekt-Sensoren 23, 22 und 21 im Abstand von jeweils 30° zueinander am Statorpol 20 des Motors 1 angeordnet sind. Diese Hall-Effekt-Sensoren dienen der Positionsermittlung des Außenläufers gegenüber dem Stator. Durch jeden Hall-Effekt-Sensor wird ein Signal vorgesehen, wenn sich die Schnittstelle zweier benachbarter Dauermagnetsegmente des Außenläufers mit entgegengesetzter magnetischer Ausrichtung an ihm vorbeibewegt.

Beispiel

Passiert die Schnittstelle zwischen den Dauermagnetsegmenten 2-1 und 2-4 den Hall-Effekt-Sensor 23, so erzeugt dieser ein elektrisches Sensorsignal. Da bei einer Motordrehung aufeinanderfolgende Schnittstellen eine entgegengesetzte magnetische Polarität aufweisen und da vier Außenläufer-Segmente vorgesehen sind, ändert sich nach jeder (mechanischen) 90° Drehung des Außenläufers mit dem Passieren einer Schnittstelle die Polarität des Sensorsignales. Jedem Sensor ist eine Schmitt-Trigger-Schaltung zugeordnet, deren (binäres) Ausgangssignal sich gemäß der FB1- oder FB2- oder FB3-Signalfolge (im folgenden Positionssignal 1, Positionssignal 2 bzw. Positionssignal 3 genannt) darstellt. Der Schmitt-Trigger des Sensors 23 liefert somit das Positionssignal 1 FB1, der Schmitt-Trigger des Sensors 22 das Positionssignal 2 FB2 und der Schmitt-Trigger des Sensors 21 das Positionssignal 3 FB3. Innerhalb jeder Positionssignalfolge ändert sich der Signalverlauf nach jeder 90° Motordrehung von hoch auf tief bzw. umgekehrt.

Aus der Tatsache, daß insgesamt drei jeweils um 30° gegeneinander versetzte Hall-Effekt-Sensoren 23, 22 und 21 vorgesehen sind, ergibt sich der in Fig. 7A dargestellte zeitliche Verlauf der Positionssignale.

Aus dem FB2 Verlauf ist zu folgern, daß die Schnittstelle 2-1/2-4 den Sensor 22 nach einer Drehung von 30° passiert und die Schnittstelle 2-4/2-3 den gleichen Sensor nach einer weiteren Drehung um 90° (insgesamt also nach 30 + 90 = 120°) passiert. Jedesmal (also bei 30° und 120°) ändert das FB2-Positionssignal seinen binären Pegel.

Analoge Betrachtungen gelten für sämtliche Positionssignale FB1, FB2 und FB3.

Insgesamt haben somit die Signale FB1, FB2 und FB3 für das gewählte Motorausführungsbeispiel zwölf Schaltflanken pro Motorumdrehung.

Wie später noch ausführlich erörtert, wird aus jeder FB1-, FB2- und FB3-Schaltflanke in herkömmlicher Weise ein sog. IRQ-Signal, ein Anforderungssignal für Kommutierung und Zeitmessung erzeugt.

In Fig. 8 sind die Stromflußrichtungen zwischen den einzelnen Klemmen A, B und C im Sinne der an den Wicklungen W1, W2 bzw. W3 abfallenden (gepulsten) Versorgungsspannung für sämtliche Drehstellungsbereiche in 30°-Abstufung (mechanisch) dargestellt. Die Bezeichnungen der einzelnen Kommutierungsschritte 1, 2, 3, 4, 5 und 6 nach Fig. 7A und für die Kommutierungsdrehbereiche in 30°-Abstufung werden in Fig. 8 beibehalten. Auf diese Weise ist es nunmehr einfach, aus der Darstellung in Fig. 8 zu erkennen, bei welchen Kommutierungsschritten (1-6) ein Stromfluß zwischen bestimmten Klemmen A, B bzw. C erfolgt. Es wurde bereits erörtert, daß für den Kommutierungsbereich 1 ein Stromfluß von der Klemme A zur Klemme C erfolgt. Dieser Umstand ist in Fig. 8 durch den mit dem Kommutierungsschritt 1 bezeichneten Pfeil berücksichtigt. Das Pfeilende ist mit (R), die Pfeilspitze mit (V) bezeichnet. Dies bedeutet, daß für die Zeit des Kommutierungsschrittes 1 der Transistor A2 durch dessen gepulste Steuerspannung R und der Transistor C1 durch dessen Steuerspannung V im leitenden Zustand ist. Durch die Zuordnung der einzelnen Strompfeile 1 bis 6 in Fig. 8 zu den verschiedenen Polwicklungen ist es möglich zu erkennen, welche der Wicklungen während der einzelnen Kommutierungsschritte stromdurchflossen sind. Für den Strompfeil 1 sind es die Wicklungen W1 und W3. Analoge Aussagen gelten für alle anderen Strompfeile. Es fließt z. B., während des Kommutierungsschrittes 5 ein Strom von der Klemme B zur Klemme A durch die Wicklungen W2 und W1, wobei der Transistor B2 durch die gepulste Steuerspannung T und der Transistor A1 durch die Steuerspannung U im leitenden Zustand ist.

Die Erkenntnisse aus Fig. 8 lassen sich leicht — wie in Fig. 9 dargestellt — tabellarisch erfassen.

In dieser Tabelle wird für jeden Kommutierungsschritt (Zeilen 1 bis 6) in den Spalten für die Steuerspannungen R, S, T, U, V und W binär vermerkt, ob die entsprechende Steuerspannung vorhanden ist (binäre 1) oder nicht (binäre 0). Aus diesem Grunde ergibt sich z. B. für die Tabellenzeile mit dem Kommutierungsschritt 1 für die Steuerspannungen R und V eine « 1 » Eintragung, für alle anderen Steuerspannungen S, T, U, W eine « 0 » Eintragung. Es sei an dieser Stelle wieder bemerkt, daß die R, S, T Eintragungen als Hinweise auf einen gepulsten Betrieb zu verstehen sind.

Die im Zusammenhang mit Fig. 7A erwähnten Positionssignale FB1, FB2 und FB3 werden auch in der in Fig. 9 wiedergegebenen Tabelle berücksichtigt. Für die einzelnen Kommutierungsschritte werden die (binären) Signalpegel für die FB1, FB2 und FB3 Signalfolge durch eine binäre « 0 » oder « 1 » in der Tabelle vermerkt.

Beispiel

Kommutierungsbereich 5 (120 bis 150° : FB1 = 0, FB2 = 0, FB3 = 1).

Kommutieren und Pulsen der Motorerregung

Im folgenden sei erklärt, inwieweit sich die Kommutierungszeitpunkte und das Pulsen der Motorerregung gegenseitig beeinflussen können. Nach Ablauf eines Kommutierungsschrittes (in Fig. 7A bzw. Fig. 8 mit 1 bis 6 gekennzeichnet) wird die über 2 Wicklungen liegende (gepulste) Versorgungsspannung + VS abgeschaltet und über 2 andere Wicklungen gelegt.

Beispiel

Während des Kommutierungsschrittes 1 sind die Wicklungen W1 und W3 mit einer Erregerspannung beaufschlagt, die am Ende des Kommutierungsschrittes 1 abgeschaltet und für den Zeitraum des Kommutierungsschrittes 2 über die Wicklungen W1 und W2 gelegt wird. Bei diesem Umschalten wird eine Wicklung (in diesem Beispiel die Wicklung W3) « abgehängt », während die eine neue Wicklung (in diesem Fall W2) « zugeschaltet » wird. Der abgeschalteten Wicklung W3 und der hinzugeschalteten Wicklung W2 ist jedoch die Wicklung W1 gemeinsam. Beim Zuschalten einer zuvor stromlosen Wicklung (in diesem Fall W2) ergibt sich jedoch ein langsamerer (in Fig. 11 mit δ gekennzeichneter) durch die Wicklungsinduktivität bedingter Stromanstieg im Vergleich zu dem schnelleren Stromanstieg β während des Pulsbetriebes ohne Kommutierung. Hiermit ist folgendes gemeint : würde ohne Kommutierung die über W1 und W3 liegende Spannung abgeschaltet werden, so ergäbe sich ein Stromabfall auf Imin wie er

6

in Fig. 11 mit α gekennzeichnet ist. Würde anschließend während des Pulsbetriebes die Spannung + VS wieder auf W1 und W3 aufgeschaltet werden, so ergäbe sich der mit β gekennzeichnete Stromanstieg. Dieser zeigt aus besagten Gründen einen schnelleren Anstiegsverlauf als bei Zuschalten einer zuvor stromlosen Wicklung im Falle einer Kommutierung.

Daraus folgt, daß bei Kommutierung die Zeit TV1 zwischen dem Kommutierungszeitpunkt PC mit nachfolgendem Stromabfall γ auf Imin und anschließenden Stromanstieg δ bis zum Erreichen des Stromwertes Imax im Punkt PA größer ist als die Zeit TV2, die während des Pulsbetriebes ohne Kommutierung verstreicht und den Strombfall α von Imax auf Imin und den nachfolgenden Stromanstieg β von Imin auf Imax umfaßt. Es sei an dieser Stelle bemerkt, daß durch Wirkung der Induktivitäten der Polwicklungen die Stromabfälle und -anstiege bei rechteckförmigen Steuerpulsen einen exponentialförmigen Verlauf annehmen.

Aus dem zuvor Gesagten folgt, daß die Zeit TV1 immer größer ist als die Zeit TV2. Bei der Darstellung in Fig. 11 wird davon ausgegangen, daß die Kommutierung im Punkte PC erfolgt. Die Stromabfallzeit TV3 nach Kommutierung, kann kleiner sein als die Stromabfallzeit TV4 während des gepulsten Betriebes ohne Kommutierung. Der Grund hierfür ist darin zu sehen, daß beim « Abhängen » einer Wicklung bei Kommutierung nur noch ein Teil der Energie in der nicht abgehängten Wicklung abgebaut werden muß.

Die Drehzahlregelung — Aufgabe der Erfindung war ein Konstantdrehzahlregelung bei Stoßbelastung — wird von den vier Zeitvariablen TV1, TV2, TV3 und TV4 bestimmt. Diese Zeitvariablen werden von einem Prozessor nach einem drehzahlabhängigen Algorithmus berechnet und der Drehzahlregelung zugrundegelegt.

Idealerweise werden dabei die Stromwerte wie in Fig. 11 dargestellt, zwischen Imax und Imin schwanken. Geringfügige durch Toleranzen bedingte Variationen im Stromverlauf für die vorzugebenden Zeiten TV3 bzw. TV1, können dazu führen, daß die Punkte PB und PA von Imin und Imax etwas abweichen. Zu weiteren geringen Abweichungen kann es dann kommen, wenn die Kommutierung nicht im Punkt PC sondern erst etwas später aber nicht immer innerhalb der Puls-Auszeit während des Pulsbetriebes erfolgt. In einem solchen Fall könnte die wirkliche Stromabfallzeit größer werden und im Extremfall den Wert TV4 annehmen.

Derartige Abweichungen nehmen jedoch keinen nennenswerten Einfluß auf den für die Regelung maßgebenden Mittelwert des Stromes für einen Kommutierungsschritt.

Wesentlich ist jedoch, daß der Kommutierungszeitpunkt nicht in die Zeit eines Stromanstieges β des Pulsbetriebes fällt, sondern frühestens erst bei Erreichung von Imax im Punkt PC erfolgt. Andernfalls würde es zu einem Stromverlauf wie in Fig. 4 dargestellt kommen können. Der Strom würde nicht mehr zwischen den Werten Imin 1 und Imax 1 schwanken sondern nach Kommutierung auf einen niedrigeren Wert als Imin 1 nämlich auf Imin 2 abfallen, um anschließend wieder auf Imax 2 (kleiner als Imax 1) anzusteigen. Es ist klar zu erkennen, daß der maßgebende Mittelwert des Stromes für die Pulsperiode TV1 nach Kommutierung kleiner als für die Pulsperiode TV2 vor Kommutierung ist.

Ein solches Absinken des für die Regelung maßgebenden Mittelwerte des Stromes würde letzlich zu unkontrollierten Stromschwankungen führen und muß unbedingt vermieden werden.

(Bei einer Drehzahlregelung unter Kenntnis der Stromwerte gemäß Fig. 3 stellte sich dieses Problem nicht, da hierbei nach Absinken des Stromes auf den Wert Imin infolge einer Kommutierung zu beliebigen Zeitpunkten der Pulsbetrieb wieder einsetzt und ein weiterer Stromabfall nicht in Kauf zu nehmen ist).

Aus diesem Grunde muß während des Pulsbetriebes (Fig. 11) die Kommutierung auf einen Zeitpunkt verzögert werden, der in der Stromabfallzeit des Pulsbetriebes liegt. D. h. die Kommutierung darf frühestens vorgenommen werden, wenn während des Stromanstieges β Impulsbetrieb der Wert Imax erreicht wurde.

Aus der Kenntnis der IRQ-Signalfolge (auf Fig. 7A) ist bekannt, zu welchen Zeitpunkten eine Kommutierung vorgenommen werden sollte. Durch Vergleich dieser Zeitpunkte mit dem Puls-An- und Puls-Auszeiten für die gepulste Motorerregung läßt sich feststellen, ob die IRQ-Anforderungssignale für Kommutierung in die Puls-An- oder Puls-Auszeiten fallen. Ist ersteres der Fall, muß die Kommutierung solange verzögert werden, bis der Stromanstieg für eine Puls-Anzeit abgeschlossen ist.

Es sei vorbemerkt, daß die Puls-An- und Puls-Auszeiten für den Pulsbetrieb mit und ohne Kommutierung vorausberechnet werden und daß es somit unter Kenntnis dieser Zeiten möglich ist, die Kommutierungszeitpunkte so zu verzögern, daß sie am Ende eines Stromanstieges β für den Pulsbetrieb liegen.

Bestimmung der Zeitvariablen TV1, TV2, TV3 und TV4 für den drehzahlabhängigen Algorithmus zur Konstantdrehzahlregelung.

Die Zeitvariablen sollen wie folgt definiert sein :

TV1 = Steuerspannungspulsperiode nach der Kommutierung, einen Stromabfall γ und einen Stromanstieg δ zur Bildung eines Stromsägezahnes für die Motorerregung umfassend.

TV2 = Steuerspannungspulsperiode ohne Kommutierung, einen Stromabfall α und einen Stromanstieg β zur Ausbildung eines Stromsägezahnes für die Motorerregung umfassend.

TV3 = Zeit für den Stromabfall nach einem Kommutierungszeitpunkt (TV3 liegt innerhalb von TV1)

TV4 = Zeit für den Stromabfall (Puls-Aus-Zeit) für den Pulsbetrieb ohne Kommutierung (TV4 liegt innerhalb von TV2)

In Fig. 11 ist der zeitliche Verlauf des Motorsummenstromes gezeigt. Der sägezahnartige Verlauf der

7

Stromkurve deutet darauf hin, daß der Motor im Pulsbetrieb bestromt wird. Grundsätzlich schwankt der Strom zwischen einem Maximalwert Imax und einem Minimalwert Imin. Dadurch wird gewährleistet, daß der Mittelwert des Stromes im wesentlichen gleich bleibt. Der Pulsbetrieb ist durch entsprechende Zeitvorgaben gekennzeichnet. Nach der Kommutierung im Punkt PC erfolgt zunächst ein Stromabfall γ während der Zeit TV3 auf den Wert Imin dem sich dann ein Stromanstieg δ auf den Wert Imax im Punkte PA anschließt. Eine IRQ-Kommutierungsanforderung kann zu jedem beliebigen Zeitpunkt innerhalb der einer Zeitperiode TV2 anfallen. Diese Zeitperiode ist typisch für den Pulsbetrieb des Motors.

Sie besteht aus einem Stromabfall α während der Zeit TV4 und einem Stromanstieg β. Die angeforderte Kommutierung wird verzögert bis die Zeit TV2 abgelaufen ist. D. h., die Kommutierung wird in die nächste Puls-Aus-Zeit TV4 verlegt, vorzugsweise auf den Punkt PC der das Ende des Stromanstieges β auf den Wert Imax und den Beginn des Stromabfalls γ kennzeichnet. Die Verzögerung des Kommutierungszeitpunkts um maximal TV2 ist ohne Auswirkung auf die Motorregelung, da TV2 klein ist gegenüber den Kommutierungs-Zeitabständen.

Der Anstieg und Abfall des Motorerregerstromes ist von der Motorinduktivität und der Motordrehzahl abhängig.

Bei Stillstand des Motors oder geringer Drehzahl ist seine Generatorwirkung, die Ausbildung einer gegenelektromotorischen Kraft 0 bzw. vernachlässigbar. Mit wachsender Drehzahl verlangsamt sich der der Stromanstieg (die Steigung eines « Stromzahnes » wird geringer) bzw. beschleunigt sich der Stromabfall (die Steigung des Stromabfalls wird größer). Diese Tatsache ist bei der Berechnung der Variablen TV1 bis TV4 zu berücksichtigen. Die Steuerspannungspulsperioden TV1 und TV2 sowie die Puls-Aus-Zeiten TV3 bzw. TV4 sind exakt vorzugeben, um den mittleren Stromwert halten zu können.

Im folgenden sei der Regelalgorithmus erläutert : Dazu sei zunächst auf drei benachbarte IRQ-Pulse (siehe Fig. 7A) verwiesen : $Z_{p-2}$, $Z_{p-1}$, $Z_p$. Die Zeitpunkte dieser Pulse können leicht durch eine elektronische Zeitmessung z. B. mit Hilfe eines Ringzählers (im Mikroprozessor enthalten) der bei jedem IRQ-Puls abgelesen wird, bestimmt werden.

$Z_p$ sei der Zeitpunkt des letzten IRQ-Pulses,
$Z_{p-1}$ der Zeitpunkt des vorletzten IRQ-Pulses und
$Z_{p-2}$ der Zeitpunkt des vor-vor-letzten IRQ-Pulses.

Durch Subtraktion erhält man die Kommutierungsperioden T und Talt, die ein Maß für die momentane Geschwindigkeit des Motors zwischen den einzelnen IRQ-Pulsen darstellen.

$$T = (Z_p) - (Z_{p-1})$$
$$Talt = (Z_{p-1}) - (Z_{p-2}).$$

Durch Subtraktion der Zeiten T bzw. Talt von einer der Soll-Drehzahl entsprechenden Zeit Tnom erhält man :

$$DT = Tnom-T$$
$$DTalt = Tnom-Talt.$$

Diese Größen sind ein Maß der Geschwindigkeitsabweichungen in dem letzten und vor-letzten Zeitraum der durch die entsprechenden IRQ-Signale $Z_p$, $Z_{p-1}$ und $Z_{p-2}$ abgegrenzt sind.

Diese Größen DT und DTalt werden zur Berechnung von TV1 bis TV4 nach folgenden Formeln herangezogen :

$$TV1 = K1 + TV1alt + G1 \times DT + P \times (DT-DTalt)$$
$$TV2 = K2 + A2 \times TV1$$
$$TV3 = K3 + A3 \times TV1$$
$$TV4 = K4 + A4 \times TV1$$

Es bedeuten K1 bis K4 Konstanten des Antriebsystemes, die experimentell oder analytisch wie alle anderen Faktoren auch bestimmt werden.

G1 Verstärkungsfaktor (Gain Factor) zur Nachregelung, wenn die Zeit DT $\neq$ 0 ist (Drehzahlabweichung)

P Dämpfungsfaktor (Weighted Past Factor) zur Vermeidung von Motorschwingungen.

A2 bis A4 Abschwächungsfaktoren (Attenuation Factors), da TV2, TV3 und TV4 zwar von TV1 abhängen, aber kleiner als TV1 sind.

Aus der Formel zur Berechnung von TV1 ist ersichtlich, daß die neue Zeit TV1 von der alten Zeit TV1alt abhängt. Hierbei bedeutet TV1alt die Zeit für die vorausgehende und bereits abgelaufene « Steuerspannungspulsperiode » mit Kommutierung. TV1 wächst, solange die IST-Drehzahl geringer als die Soll-Drehzahl ist, d. h., solange DT > 0 bzw. (DT-DTalt) < 0 ist. TV1 wird kleiner, solange die Ist-Drehzahl höher als die Soll-Drehzahl ist, d. h. solange DT < 0 bzw. (DT-DTalt) > 0 ist. TV2 bis TV4 sind von TV1 abgeleitete Größen und dienen dazu, den Mittelwert des Motorerregerstromes zu halten. Aus den Formeln ist ersichtlich, daß die Regelung hauptsächlich von TV1 bestimmt wird. TV1 ist bekannterweise die Zeit für den Stromabfall und den Stromanstieg nach der Kommutierung. Ferner ist ersichtlich, daß TV1 von TV1(alt) für die vorherige Berechnung, von der momentanen Geschwindigkeitsabweichung DT sowie von der momentanen Beschleunigung (DT-DTalt) abhängt.

In Fig. 12 ist ein Blockschaltbild zur mikroprozessorgesteuerten Bestimmung der Puls- und Kommutierungszeiten gezeigt. Diese Schaltung besteht aus einem Mikrocomputer 100. Dem Mikrocomputer MCU (MCU = Micro Computer Unit) werden auf den Leitungen 101, 102 und 103 die binären Zustände der Signalfolgen FB1, FB2 und FB3 als logische 1 für den positiven Signalpegel bzw. als logische 0 für den negativen Signalpegel zugeführt. Es wurde bereits darauf hingewiesen, daß von den Flanken der FB1-, FB2- und FB3-Signalfolge die sog. IRQ-Signale abgeleitet werden. Aus diesem Grunde ist die Leitung 101 für die FB1-Signalfolge über die Leitung 116 mit einer Flankendetektorschaltung 106 « LE » für die Anstiegsflanke und einer Flankendetektorschaltung 107 « TE » für die Abfallflanke verbunden. Entsprechend ist die Leitung 102 für die FB2-Signalfolge über die Leitung 115 mit einer Flankendetektorschaltung 108 für die Anstiegsflanke und einer Flankendetektorschaltung 109 für die Abfallflanke verbunden. Analoges gilt für die Leitung 103, welche über die Leitung 114 mit einer Flankendetektorschaltung 110 für die Anstiegsflanke und einer Flankendetektorschaltung 111 für die Abstiegsflanke von Signalen der FB3-Signalfolge verbunden ist. Die Ausgänge der Flankendetektorschaltungen 106 bis 111 liefern beim Auftreten einer Flanke einen entsprechenden Ausgangsimpuls, welche über das ODER-Glied 112 zu den IRQ-Pulsen auf Leitung 113 zusammengefaßt werden. Diese IRQ-Pulse stellen Anforderungssignale für die Kommutierung und Zeitmessung dar. Sie werden dem Mikroprozessor 100 zugeführt. Die IRQ-Pulsfolge ist in Fig. 7A gezeigt.

Des weiteren ist im Speicher des Mikrocomputers 100 eine sog. Kommutierungstabelle gespeichert, wie sie in Fig. 9 wiedergegeben ist. Die Kommutierungsschritte in dieser Tabelle sind, wie auch in den Fign. 7 und 8 dargestellt mit 1 bis 6 gekennzeichnet. Es sei vorausbemerkt, daß sich diese Tabelle auf das Ausführungsbeispiel des Motors nach Fig. 5 in Verbindung mit den Fign. 6, 7 und 8 bezieht. Aus den Darstellungen in Fig. 7 läßt sich z. B. ablesen, daß für den Kommutierungsschritt 1, FB1 einen positiven Signalpegel, FB2 und FB3 hingegen einen negativen Signalpegel zeigen. Somit gibt die Tabelle im Mikrocomputer die Folge der Kommutierungsschritte wieder. Beim Start des Motors liest der Mikroprozessor den Pegelzustand der FB1-, FB2- und FB3-Signalverläufe auf den Leitungen 101, 102, 103 und kan aus dem aktuellen Pegelzustand dieser Leitungen die Startposition in der Tabelle definieren. Damit liegt fest, mit welchem Kommutierungsschritt die Kommutierung des Motors beginnen muß. Liegt dieser Startpunkt fest, so werden die nachfolgenden Kommutierungsschritte mit jeder IRQ-Unterbrechungsanforderung zyklisch weitergeschaltet.

Liegt z. B. der Startpunkt beim Kommutierungsschritt 5, so folgt Kommutierungsschritt 6, dann Kommutierungsschritt 1, dann Kommutierungsschritt 2 etc. Die Anforderungssignale werden, wie bereits erwähnt, von den IRQ-Signalen abgeleitet.

Nach einem bestimmten Drehwinkel (halbe oder ganze Umdrehung) überprüft der Mikrocomputer den Synchronismus zwischen den Signalverläufen von FB1, FB2, FB3 und den IRQ-Signalen (wegen einer möglichen Störanfälligkeit der IRQ-Signale). D. h., der Mikrocomputer liest die Leitungen 101, 102 und 103, um den Kommutierungszustand (Kommutierungsschritt 1 bis 6) zu definieren. Ist nun die zu einem Kommutierungsschritt gehörige Treiberkombination R, S, T, U, V, W eine andere, so wird mit jenem Kommutierungsschritt der Tabelle zwangssynchronisiert, welcher der aktuellen FB1, FB2, FB3 Signalkombination entspricht. Bei zu häufiger Korrektur, bei falschen FB1, FB2, FB3-Signalfolgen oder bei nicht in der Tabelle definierten FB1, FB2, FB3-Signalkombination kann der Mikrocomputer eine Störung melden und den Motor abschalten.

Beim Anlaufen des Motors fehlt natürlich der zur Berechnung der Größen TV1, TV2, TV3 und TV4 erforderliche Wert TV1alt bzw. Talt. Für TV1 wird ein vorgegebener Maximalwert eingesetzt. Aus diesem Wert werden die Zeitvariablen TV2 bis TV4 errechnet, so daß die Anlaufströme begrenzt werden können.

In jeder Zeile der Tabelle nach Fig. 9 sind für jede Steuerspannung der Treibertransistoren binäre Steuerinformationen gespeichert. Eine binäre « 1 » für R für den Kommutierungsschritt 1 bedeutet, daß zu der mit FB1, FB2 und FB3 vorgegebenen Signalkombination der Transistor für die gepulste Steuerspannung R und der Transistor für die Steuerspannung V in den leitenden Zustand zu steuern ist. Somit ist der Synchronismus zwischen den Signalzuständen für FB1, FB2 und FB3 mit den Kommutierungszuständen der Treiberschaltungstransistoren gegeben.

Der Mikrocomputer besitzt einen nicht dargestellten 16-Bit Ringzähler, der beispielsweise mit einer Taktzeit von 1 millionstel Sekunde fortgeschaltet wird. Bei jedem IRQ-Puls verzweigt der Mikroprozessor aus einem Hauptprogramm in ein Unterbrechungsprogramm, um den Stand des frei laufenden Ring-Zählers auszulesen. Durch Subtraktion des aktuellen Zählerstandes vom letzten Auslesewert ergibt sich somit ein Zeitwert für eine 30°-Motordrehung ; damit ist jedoch auch die momentane Motorgeschwindigkeit bekannt.

Eine verfeinerte und genauere Geschwindigkeitsbestimmung wäre mit Impulsgebern (Hall-Effekt-Sensoren) feinerer Winkelteilung als im gewählten Ausführungsbeispiel (30°) möglich.

Es wurde bereits darauf hingewiesen, daß die Treibertransistoren A1, B1, C1 durch ihre Steuerspannungen U, V, W entweder in den leitenden oder in den gesperrten Zustand gesteuert werden. Sie lassen sich unter Verwendung der Tabellenwerte aus Fig. 9 direkt vom Mikrocomputer 100 über die Leitungen 201, 202, 203 ansteuern. Eine binäre 1 für die Steuerspannung bedeutet, daß für den vorgegebenen Kommutierungsschritt der entsprechende Treibertransistor leitend gesteuert wird. Im Gegensatz dazu werden die Treibertransistoren A2, B2, C2 entsprechend der Darstellung nach Fig. 10 gepulst. Die Puls-Steuersignale werden dabei vom Mikrocomputer hinsichtlich ihrer An- und Aus-Zeiten berechnet und vorgegeben. Die gepulsten (R, S, T) und nichtgepulsten (U, V, W) Steuersignale für die treibertransistoren sind schematisch in Fig. 10 dargestellt. In dieser Darstellung sind aus Vereinfachungsgründen die gepulsten und nichtgepulsten Steuersignale jedoch nicht alle zeitlich aufeinander abgestimmt, wie dies in Fig. 7B der Fall ist. Wie bereits erwähnt werden für eine gepulste Steuersignalfolge die Puls-An- und Puls-Aus-Zeiten errechnet. Während des üblichen Pulsbetriebes sind dies die Zeiten TV2 und TV4, wie es in der rechten ausschnittsweisen vergrößerten Darstellung der Fig. 10 gezeigt ist. Beim Auftreten einer Kommutierung ergibt sich entsprechend der Darstellung in Fig. 11 eine Steuerspannungspulsperiode TV1 mit einer Puls-Aus-Zeit TV3 wie dies in der linken ausschnittsweisen vergrößerten Darstellung in Fig. 10 gezeigt ist.

In der Schaltung nach Fig. 12 ist ein zusätzlicher Schaltungsteil dafür bestimmt, die Zeitgabe der Puls-Aus-Zeiten TV3 und TV4 zu übernehmen. Von einer solchen Maßnahme wird zweckmäßigerweise Gebrauch gemacht, um den verwendeten Mikroprozessor zu entlasten, damit dieser die rechenintensiven Neuberechnungen für den Regelalgorithmus vornehmen kann.

Der Stellwert für TV3 und TV4 wird vom Mikroprozessor bestimmt und während der Puls-An-Zeit über die Leitung 204A und 204B in den Abwärtszähler Z 205 geladen (Auf der Leitung 204A erscheint der Ladebefehl, auf der Leitung 204B der zu ladende Zeitwert TV3 oder TV4). Nach Ablauf von TV1 bzw. TV2 wird vom Prozessor ein Startsignal erzeugt und über die Leitung 206 auf eine Kippschaltung 207 geführt, deren Ausgangssignal auf Leitung 208 erscheint. Dieses Signal ermöglicht über die Leitung 209 den Start (Abwärtszähllauf) des Zählers 205. Beim Erreichen des Zählwerts 0 liefert der Zähler auf seiner Ausgangsleitung 210 ein Signal, mit dem die Kippschaltung 207 zurückgesetzt wird, wobei der Zählvorgang des Zählers 205 (über die Leitungen 208 und 209) beendet wird.

Es sei ergänzend hinzugefügt, daß der Zähler 205 seine Taktpulse vom Mikroprozessor 100 über die Leitung 211 erhält. Während des Abwärtszählvorganges des Zählers 205 wird das Ausgangssignal der Kippschaltung 207 über die Leitung 208, das Negationsglied 218 und die Leitung 219 auch auf die drei UND-Glieder 212, 213 und 214 geführt. Das UND-Glied 212 dient der Vorgabe der Steuerspannung R, das UND-Glied 213 der Vorgabe der Steuerspannung S und das UND-Glied 214 der Vorgabe der Steuerspannung T. Über seinen zweiten Eingang 215 erhält das UND-Glied 212 vom Mikroprozessor 100 die nichtgepulste Steuerspannung R. Die Information dafür stammen aus der im Mikroprozessor gespeicherten Fig. 9 entsprechenden Tabelle.

Über seinen zweiten Eingang 216 erhält das UND-Glied 213 vom Mikroprozessor die nichtgepulste Steuerspannung S.

Über seinen zweiten Eingang 217 erhält das UND-Glied 214 vom Mikroprozessor die nichtgepulste Steuerspannung T.

Mit anderen Worten : Aus der Tabelle gemäß Fig. 9 ist zu entnehmen, welches der drei Steuersignale R, S, T für einen Kommutierungsschritt aktiv sein soll. Für diesen aktiven Zeitraum berechnet der Mikroprozessor wie bereits erwähnt, die Zeiten TV4, TV2, TV3 bzw. TV1. Durch die Folge der Startpulse auf Leitung 206 legt der Mikroprozessor die Zeitintervalle TV1 und TV2 fest. Durch das Laden des Zählers, die Puls-Aus-Zeiten TV3 und TV4. Auf dieser Weise stehen an den Ausgängen der drei UND-Glieder 212, 213 und 214 die gepulsten Steuerspannungen R, S und T zur Verfügung. Angenommen, die ungepulste Steuerspannung R läge auf der Leitung 215 am UND-Glied 212 für die Zeit TV2. Das UND-Glied 212 ist auf seinem zweiten Eingang über die Leitung 219 für die Zeit TV3 oder TV4 unkonditioniert ; denn in dieser Zeitspanne TV3 oder TV4, während der der Zähler 205 seinen Abwärtszähllauf vollzieht, steht am Ausgang 208 der Kippschaltung 207 ein Ausgangssignal an, welches vom Negationsglied 218 negiert wird. Während der Nicht-Puls-Aus-Zeiten TV2-TV4 bzw. TV1-TV3 hingegen steht auf Leitung 208 kein Ausgangssignal an, so daß während dieser Zeiten über das Negationsglied 218 die ersten Eingänge der UND-Glieder 212, 213 und 214 konditioniert werden.

Für das UND-Glied 212 bedeutet dies : zweiter Eingang 215 konditioniert während TV1 bzw. TV2 ; erster Eingang 219 konditioniert während TV1-TV3 bzw. TV2-TV4. Das heißt, nur während der Zeiten TV1-TV3 bzw. TV2-TV4 steht am Ausgang des UND-Gliedes 212 ein (gepulstes) Steuersignal zur Verfügung (Puls-Aus-Zeit TV3 bzw. TV4, Puls-An-Zeit TV1-TV3 bzw. TV2-TV4).

Entsprechendes gilt für die Steuerspannungen S und T im Zusammenhang mit den UND-Gliedern 213 und 214. Von den Steuerspannungen R, S, T ist jeweils nur eine aktiv.

Aus der Darstellung in Fig. 7 bzw. Fig. 9 geht hervor, daß die Steuerspannungen R, S, T zeitlich einander nicht überlappen. Dies ist auch der Grund dafür, daß auch nur jeweils eine dieser Steuerspannungen gepulst wird, während dieser Pulszeit bleiben die anderen auf Massepotential. Auf diese Weise kann der die Kippschaltung 207 und den Abwärtszähler 205 umfassende Schaltungsteil zur Vorgabe der Puls-Aus-Zeiten nacheinander für die Steuerspannungen R, S, T verwendet werden.

Der Vollständigkeit halber sei noch erwähnt, daß der Mikroprozessor über die Leitungen 104A den Befehl zum Laufen des Motors (RUN) sowie über die Leitung 104B Information erhält, mit welcher Geschwindigkeit sich der Motor bewegen soll.

Es wurde bereits darauf hingewiesen, daß zur Berechnung von TV1 der aktuellen Kommutierungsperiode T, die Zeit Talt der vorausgehenden Kommutierungsperiode herangezogen wird.

Dieser Wert T bzw. Talt kann auch der Mittelwert mehrerer aufeinanderfolgender « Kommutierungsperioden » sein ; auf diese Weise werden Toleranzabweichungen in der Positionierung der Hall-Effekt-Sensoren ausgeglichen.

Die Darstellung in Fig. 11 bezieht sich auf den « Gleichgewichts-Zustand », bei dem keine Belastungsänderungen des Motorantriebssystemes auftreten und somit auch keine Änderungen des Mittelwertes des Motorsummenstromes. In einem solchen belastungsänderungsfreiem Zustand schwankt der Strom zwischen Imax und Imin und für das Drehmoment des Motors ist der Mittelwert des Motorsummenstromes maßgebend.

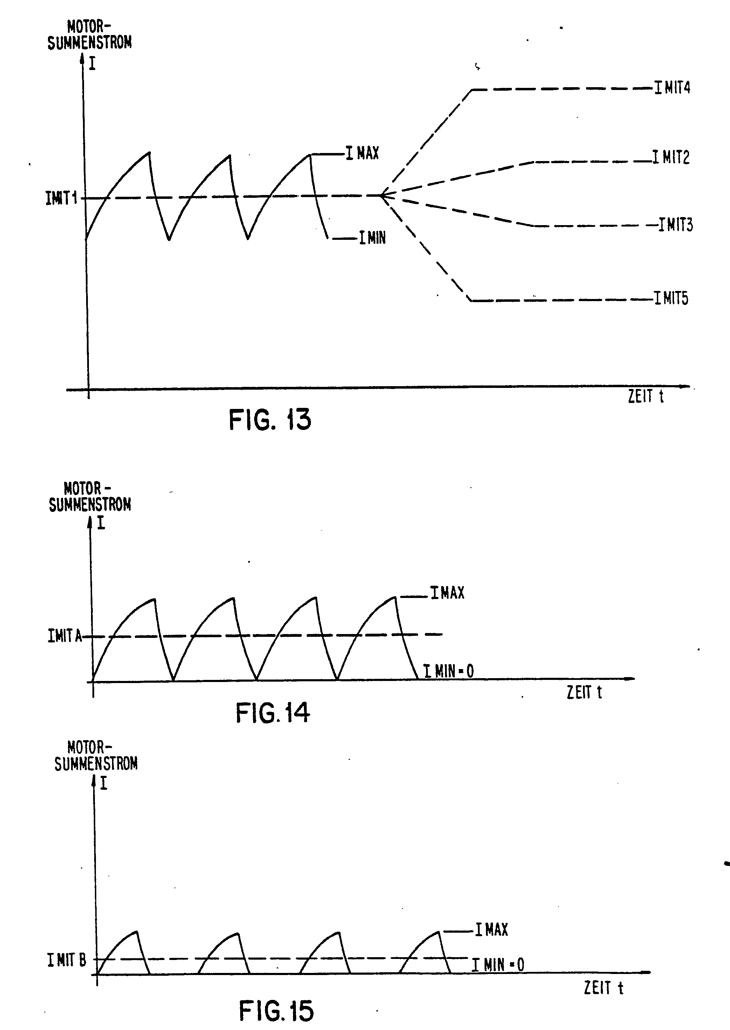

In Fig. 13 ist dargestellt, wie sich bei Belastungsänderungen der Mittelwert des Motorsummenstromes ändern kann. Im linken Teil der Darstellung ist für einen belastungsänderungsfreien Zustand (vergleichbar mit der Darstellung in Fig. 11) der Mittelwert des Motorsummenstromes mit Imit1 bezeichnet. Bei Belastungsänderungen wird sich dieser Mittelwert verändern und z. B. bei kleinen Belastungsänderungen die Werte Imit2 (bei steigender Belastung) bzw. Imit3 (bei fallender Belastung) annehmen. Bei größeren Belastungsänderungen wird sich der Mittelwert des Motorsummenstromes Imit1 bei stark steigender Belastung z. B. auf einen Mittelwert Imit4 oder bei stark fallender Belastung einen Mittelwert Imit5 ändern. Aus Gründen der Übersichtlichkeit der Darstellung wurde auf den sich aus dem Pulsbetrieb ergebenden sägezahnförmig ähnlichen Verlauf des Motorsummenstromes im rechten Teil der Darstellung von Fig. 13 verzichtet. In diesem Teil wurden lediglich die Mittelwerte des Motorsummenstromes dargestellt.

Eine Belastungsänderung des Motorantriebssystemes bewirkt eine Änderung seines Drehzahlverhaltens. Die Änderung des Drehzahlverhaltens nimmt jedoch wiederum Einfluß auf die Bestimmung der Größen TV1, TV3, TV4 TV2. Diese Größen werden so bestimmt, daß im belastungsänderungsfreien Zustand des Motorantriebssystemes die Stromwerte sägezahnförmig zwischen zwei Grenzen Imax und Imin schwanken. Beim Auftreten einer Belastungsänderung jedoch können die absoluten Grenzen für Imax und Imin zu höheren oder niederen Werten verschoben werden, so daß sich eine Änderung des Mittelwertes des Motorsummenstromes ergibt. Dabei wird der Übergang von einem Belastungszustand, z. B. mit dem Mittelwert des Motorsummenstromes Imit1, auf einen anderen Belastungszustand, z. B. mit dem Mittelwert Imit4 des Motorsummenstromes, durch entsprechende Vorgabe der zu errechnenden Werte TV1, TV3, TV2, TV4 bewirkt.

Im Gegensatz zu Synchronmotoren kann auf kleine Geschwindigkeitsänderungen des Motorantriebssystemes mit einer hohen Stromänderung (gemeint ist der Mittelwert des Motorsummenstromes) reagiert werden, um möglichst schnell eine Nachregelung der Drehzahl zu erreichen.

Bei einer langsamen Motorbelastungsänderung werden die Steuerspannungspulse so vorgegeben, daß sich eine relativ kleine mittlere Motorstromänderung ergibt. Bei einer schnellen Motorbelastungsänderung hingegen, werden die Steuerspannungspulse so vorgegeben, daß sich eine relativ große mittlere Motorstromänderung ergibt.

In Fig. 13 wurde bereits darauf hingewiesen, daß sich bei einer Belastungsänderung die Grenzen für Imax und Imin verschieben können. Diese Änderung kann z. B. soweit gehen, wie es in Fig. 14 gezeigt wird : Dabei nehmen die unteren Stromspitzen des sägezahnförmig ähnlichen Verlaufes des Motorsummenstromes den Wert Imin = 0 an, wobei sich ein Mittelwert des Motorsummenstromes von ImitA ergibt. Dieser Wert ImitA entspricht auch einem relativ kleinen Drehmoment des Motors, da das Drehmoment dem mittleren Motorsummenstrom proportional ist. Eine weitere Abnahme der Belastung des Motorantriebssystemes müßte einen mittleren Motorsummenstrom nach sich ziehen, der kleiner als der Wert ImitA in Fig. 14 ist.

Eine Möglichkeit hierzu ist in Fig. 15 dargestellt. In dieser Darstellung ist im gedachten sägezahnförmigähnlichen Verlauf des Motorsummenstromes der untere Teil « abgeschnitten », so daß zwischen einem auf den Wert Null erfolgtem Motorstromabfall und dem Beginn eines folgenden Motorstromanstieges eine Zeitspanne größer Null liegt. Auf diese Weise nimmt der sich aus den « oberen » Stromspitzen ergebende Mittelwert des Motorsummenstromes ImitB einen Wert an, der unter dem Wert ImitA in Fig. 14 liegt.

Ergänzend sei noch hinzugefügt, welche Möglichkeiten es zum Abbremsen des Motors gibt :

Nach einem ersten Verfahren wird zur Abbremsung ganz einfach auf die Phasenfortschaltung (Kommutierung) verzichtet, so daß sich das magnetische Feld nicht mehr weiter dreht. Aus diesem Grunde hat das stationäre magnetische Feld das Bestreben, den drehenden Außenläufer festzuhalten, ihn abzubremsen. Der Stator wirkt dabei wie eine « Rückhalte » Feder.

Nach einem besseren, aber etwas aufwendigeren Verfahren wird ein Kommutierungszeitpunkt unterdrückt, so daß sich ein negativer Vorlaufwinkel des Außenläufers ergibt. Das magnetische Drehfeld eilt somit dem Außenläufer nach und will ihn « festhalten ». In diesem Falle würde in Analogiebetrachtung mit einer Federanordnung dieselbe mitlaufen und ständig mit ihrer optimalen Federkraft den Motor abbremsen.

**Patentansprüche**

1. Verfahren zur Konstantdrehzahlregelung eines bürstenlosen Gleichstrommotors, dessen Polwicklungen zwischen ihren Kommutierungszeitpunken eine gepulste Steuerspannung zugeführt wird,

**0 093 182**

dadurch gekennzeichnet, daß die Kommutierungszeitpunkte mit den Motorstromabfallzeiten der Steuerspannungspulse synchronisiert werden, wobei die Puls-An- und Puls-Aus-Zeiten der gepulsten Steuerspannung aus dem Geschwindigkeitsverhalten des Motors, nämlich aus

a) der Geschwindigkeitsabweichung des Motors zu einem Sollwert

b) der momentanen Beschleunigung des Motors

c) einer Steuerspannungspulsperiode (TV1alt) einer vorausgehenden Kommutierungsperiode (Talt)

d) das Motorantriebssystem kennzeichnenden Konstanten, abgeleitet werden, daß der Bestimmung der Steuerspannungspulsperiode TV1 bestehend aus der Puls-Aus-Zeit TV3 und der Puls-An-Zeit (TV1-TV3) bei mit Einsetzen der Puls-Aus-Zeit erfolgenden Kommutierung der Zeitwert Talt der vorausgehenden Kommutierungsperiode zugrundeliegt, und daß die Zeitdauer TV2 für alle zwischen zwei Kommutierungszeitpunkten liegenden Steuerspannungspulsperioden, bestehend aus der Puls-Aus-Zeit TV4 und der Puls-An-Zeit (TV2-TV4) als für diese Perioden gleicher Wert bestimmt, wird, und daß die Puls-An- und Puls-Aus-Zeiten der gepulsten Steuerspannung nach folgendem Regel-Algorithmus ermittelt werden :

$$TV1 = K1 + TV1alt + G1 \times DT + P \times (DT-DTalt)$$
$$TV2 = K2 + A2 \times TV1$$
$$TV3 = K3 + A3 \times TV1$$
$$TV4 = K4 + A4 \times TV1$$

Dabei bedeuten :

DT Zeit-Differenz zwischen einem der Sollgeschwindigkeit und der Ist-Geschwindigkeit für die aktuelle Kommutierungsperiode T entsprechendem Zeitwert

DTalt Zeit-Differenz zwischen einem der Sollgeschwindigkeit und der Ist-Geschwindigkeit für die der aktuellen T vorausgehenden Kommutierungsperiode Talt entsprechenden Zeitwert.

TV1alt bereits errechnete TV1-Steuerspannungspulsperiode für die der aktuellen T vorausgehenden Kommutierungsperiode Talt.

G1 Verstärkungsfaktor

P Vergangenheitsfaktor

A2-A4 Abschwächungsfaktoren

K1-K4 Konstanten des Motorantriebssystemes

TV1 Steuerspannungspulsperiode bestehend aus der Puls-Aus-Zeit TV3 und der Puls-An-Zeit (TV1-TV3) für einen aus Stromabfall und Stromanstieg gebildeten « Stromsägezahn » des Motorstromes, bei der mit Einsetzen des Stromabfalls die Kommutierung erfolgt.

TV3 Stromabfallzeit innerhalb der Steuerspannungspulsperiode TV1.

TV2 Steuerspannungspulsperiode bestehend aus der Puls-Aus-Zeit TV4 und der Puls-An-Zeit (TV2-TV4) für einen aus Stromabfall und Stromanstieg gebildeten « Stromsägezahn » des Motorstromes ohne Kommutierung.

TV4 Stromabfallzeit innerhalb der Steuerspannungspulsperiode TV2.

2. Verfahren nach Anspruch 1, dadurch gekennzeichnet, daß beim Anlaufen des Motors die Steuerspannungspulsperiode TV1 auf einen vorgegebenen Maximalwert begrenzt wird.

3. Verfahren nach einem der Ansprüche 1 und 2, dadurch gekennzeichnet, daß bei langsamer Motorbelastungsänderung die Steuerspannungspulse so vorgegeben werden, daß sich eine relativ kleine mittlere Motorsummenstromänderung ergibt.

4. Verfahren nach einem der Ansprüche 1 und 2, dadurch gekennzeichnet, daß bei schneller Motorbelastungsänderung die Steuerspannungspulse so vorgegeben werden, daß sich eine relativ große mittlere Motorsummenstromänderung ergibt.

5. Verfahren nach einem der Ansprüche 3 oder 4, dadurch gekennzeichnet, daß für einen niederen mittleren Motorsummenstrom ImitA die untere Stromspitz Imin den Wert Null annehmen.

6. Verfahren nach einem der Ansprüche 3 oder 4, dadurch gekennzeichnet, daß für einen sehr kleinen mittleren Motorsummenstrom ImitB zwischen einem auf den Wert 0 erfolgten Motorstromabfall und dem Beginn eines folgenden Motorstromanstieges eine Zeitspanne > 0 liegt.

7. Verfahren nach einem der vorstehenden Ansprüche 1 bis 6, dadurch gekennzeichnet, daß die Drehzahlabweichung DT als Durchschnittswert mehrerer vorausgehender Kommutierungsperioden bestimmt wird.

8. Anordnung zur Durchführung des Verfahrens nach einem der vorstehenden Ansprüche 1 bis 7, dadurch gekennzeichnet, daß ein Mikrocomputer (100) vorgesehen ist, dem folgende Informationen zuführbar sind,

a) Signale (IRQ), die die einzelnen Kommutierungszeitpunkte kennzeichnen,

b) Signale (FB1, FB2, FB3), die die einzelnen Kommutierungsschritte kennzeichnen,

c) Signale, die die Soll-Motorgeschwindigkeit kennzeichnen,

und daß im Mikrocomputer eine Tabelle (Fig. 9) gespeichert ist, die zyklisch in der Kommutierungsschritt-

12

folge des Motors durchlaufen wird, wobei jeder Tabellenschritt Angaben zur Vorgabe der einzelnen Kommutierungsschritte und der entsprechenden Steuersignale für die Motortreiberschaltung enthält, daß von dem Mikrocomputer unter Berücksichtigung der aus der IRQ-Signalfolge ableitbaren aktuellen Motorgeschwindigkeit und eines Regelalgorithmus gemäß Anspruch 1, zur Ermittlung der Puls-An- und Puls-Aus-Zeiten (TV1-TV3, TV3 ; TV2-TV4, TV4) für die gepulste Steuerspannung für die Pulsperioden mit und ohne Kommutierung berechenbar sind, daß in Abhängigkeit vom Ergebnis eines Vergleiches dieser aufzuaddierenden errechneten Zeiten mit der zählergesteuert ablaufenden aktuellen Zeit die gepulste Steuerspannung vorgebbar ist, daß die Abgabe der gepulsten Steuerspannung nur in den Zeiten der Kommutierungsschritte erfolgt, wobei das Ende eines aus der Tabelle (Fig. 9) abgeleiteten durch einen IRQ-Impuls getriggerten Kommutierungsschrittes immer in eine Puls-Aus-Zeit der gepulsten Steuerspannung hinein verzögert wird und daß durch die die Kommutierungsschritte kennzeichnenden Signale der Platz in der Tabelle (Fig. 9) bestimmt ist, bei der die Kommutierungsfolge zu starten ist.

9. Anordnung nach Anspruch 8, dadurch gekennzeichnet, daß ein mit den errechneten Puls-Aus-Zeitwerten ladbarer taktgesteuerter Abwärtszähler (205) vorgesehen ist, welcher über eine vom Mikrocomputer (100) zum Zeitpunkt der Kommutierung beaufschlagbare Kippschaltung (207) aktivierbar ist, daß die Kippschaltung (207) nach einem Abwärtszähllauf des Zählers (205) rücksetzbar ist, und daß den Motor-Treiberschaltungen zugeordnete UND-Glieder (212, 213, 214) vorgesehen sind, deren erster Eingang (219) gemeinsam mit dem Ausgang der Kippschaltung (207) verbunden ist und deren zweiter Eingang (215, 216, 217) jeweils vom Mikrocomputer mit den Kommutierungsschritten entsprechenden Signalen beaufschlagbar ist.

10. Anordnung nach Anspruch 8, dadurch gekennzeichnet, daß bei einem Asynchronismus zwischen den IRQ-Signalen und den FB1-, FB2- und FB3-Signalen eine Zwangssynchronisierung mit den durch die Tabelle (Fig. 9) des Mikrocomputers für die aktuelle FB1-, FB2, FB3-Signalkombination vorgegebenen Werten erfolgt.

11. Anordnung nach Anspruch 8, dadurch gekennzeichnet, daß bei zu häufigem Asynchronismus zwischen den IRQ-Signalen und den FB1-, FB2- und FB3-Signalen, sowie bei falscher FB1-, FB2-, FB3-Signalfolge (z. B. bei Rückwärtslauf) oder bei einer in der Tabelle (Fig. 9) nicht definierten FB1-, FB2-, FB3-Signalkombination ein Motorstop mit Fehlermeldung bewirkt wird.

## Claims

1. Method for the constant speed control of a brushless DC motor whose pole windings receive a pulsed control voltage between their commutation points, characterized in that the commutation points are synchronized with the motor current drop times of the control voltage pulses, the pulse-on and pulse-off times of the pulsed control voltage being derived from the motor speed characteristics, viz., from

   a) the deviation of the motor speed from a desired value ;

   b) the instantaneous acceleration of the motor ;

   c) the duration of a control voltage pulse period (TV1alt) of a preceding commutation period (Talt) ;

   d) constants characterizing the motor drive system ;

that in the case of commutation occurring upon the start of the pulse-off time, the control voltage pulse period TV1, consisting of the pulse-off time TV3 and the pulse-on time (TV1-TV3), is determined on the basis of the time value Talt of the preceding commutation period, and that time TV2 is determined to have the same value for all control pulse periods occurring between two commutation points and consisting of the pulse-off time TV4 and the pulse-on time (TV2-TV4), and that the pulse-on and the pulse-off times of the pulsed control voltage are calculated according to the following control algorithm :

$$TV1 = K1 + TV1alt + GI \times DT + P \times (DT-DTalt)$$
$$TV2 = K2 + A2 \times TV1$$
$$TV3 = K3 + A3 \times TV1$$
$$TV4 = K4 + A4 \times TV1$$

where :

DT is the time difference between a time value corresponding to the desired speed and the actual speed for a current commutation period T ;

DTalt is the time difference between a time value corresponding to the desired speed and the actual speed for a commutation period preceding a current commutation period ;

TV1alt is the TV1 control voltage pulse period previously calculated for the commutation period preceding a current commutation period ;

G1 is the gain factor ;

P is the weighted past factor ;

A2-A4 are attenuation factors ;

K1-K4 are constants of the motor drive system ;

TV1 is a control voltage pulse period consisting of a pulse-off time TV3 and a pulse-on time (TV1-TV3) for a « sawtooth » of the motor current formed as a result of a current drop and a current rise, and in which commutation is effected upon the start of a current drop ;

TV3 is the current drop time in the control voltage pulse period TV1 ;

TV2 is the control voltage pulse period consisting of a pulse-off time TV4 and a pulse-on time (TV2-TV4) for a « sawtooth » of the motor current without commutation formed as a result of a current drop and a current rise ; and

TV4 is the current drop time in the control voltage pulse period TV2.

2. Method according to claim 1, characterized in that upon starting the motor, the control voltage pulse period TV1 is limited to a predetermined maximum value.

3. Method according to any one of the claims 1 and 2, characterized in that in the case of slow motor load changes, the control voltage pulses are predetermined in such a manner that there is a relatively small change in the mean motor sum current.

4. Method according to any one of the claims 1 and 2, characterized in that in the case of fast motor load changes, the control voltage pulses are predetermined in such a manner that there is a relatively great change in the mean motor sum current.

5. Method according to any one of the claims 3 or 4, characterized in that for a low mean motor sum current ImitA, the lower current peaks adopt the value zero.

6. Method according to any one of the claims 3 or 4, characterized in that for a very low mean motor sum current ImitB, there is a time period > 0 between a drop of the motor current to the value 0 and the start of a subsequent rise of the motor current.

7. Method according to any one of the claims 1 to 6, characterized in that the speed deviation DT is determined as an average value of several preceding commutation periods.

8. Arrangement for implementing the method according to any one of the claims 1 to 7, characterized in that a microcomputer (100) is provided to receive the following information

    a) signals (IRQ) denoting the individual commutation points ;

    b) signals (FB1, FB2, FB3) denoting the individual commutation steps ;

    c) signals denoting the desired motor speed,

and that the microcomputer stores a table (Fig. 9) which is cyclically addressed in the commutation step sequence of the motor, whereby each table step provides information for determining the individual commutation steps and respective control signals for the motor drive circuit, that the pulse-on and pulse-off times (TV1-TV3, TV3 ; TV2-TV4, TV4) for the pulsed control voltage for pulse periods with and without commutation are calculated by the microcomputer taking account of the motor speed derivable from the IRQ signal sequence and using a control algorithm according to claim 1, that the pulsed control voltage is predetermined by comparing the calculated times to be added with a current counter-controlled time, that the pulsed control voltage is emitted only at the times of the commutation steps, delaying the end of a commutation step derived from the table (Fig. 9) and triggered by an IRQ pulse into a pulse-off time of the pulsed control voltage, that the signals denoting the commutation steps determine the table position (Fig. 9) at which the commutation sequence is to be started.

9. Arrangement according to claim 8, characterized in that a clock-controlled down counter (205) is provided which can be loaded with the calculated pulse-off time values and which is activated by a flip-flop (207) controlled by the microcomputer (100) at the time of commutation, that the flip-flop (207) is reset after completion of a down count of counter (205), and that AND gates (212, 213, 214), associated with the motor driver circuits, are provided, the first input (219) of which is connected to the output of the flip-flop (207) and to the second input of which (215, 216, 217) signals corresponding to the commutation steps are applied by the microcomputer.

10. Arrangement according to claim 8, characterized in that if the IRQ signals and the FB1, FB2 and FB3 signals are asynchronous, forcible synchronization is effected with the values predetermined in the microcomputer table (Fig. 9) for a current FB1, FB2, FB3 signal combination.

11. Arrangement according to claim 8, characterized in that in the event of frequent asynchronism of the IRQ and the FB1, FB2, FB3 signals, as well as in the event of a faulty FB1, FB2, FB3 signal sequence (e. g., during motor reversal), or in the event of an FB1, FB2, FB3 signal combination not defined in the table (Fig. 9), a motor stop with an error flag is effected.

## Revendications

1. Procédé pour régler de façon constante la vitesse de rotation d'un moteur à courant continu sans balais, dont les enroulements polaires reçoivent une tension de commande pulsée entre leurs instants de commutation, caractérisé en ce que les instants de commutation sont synchronisés avec les temps des impulsions de tension de commande correspondant à une décroissance du courant-moteur, les temps d'enclenchement et d'arrêt d'impulsions de la tension de commande pulsée étant définis en fonction du comportement en vitesse du moteur, notamment en fonction :

    a) de l'écart de vitesse du moteur par rapport à une valeur de consigne,

    b) de l'accélération momentanée du moteur,

c) d'une période d'impulsions de tension de commande (TV1alt) d'une période de commutation précédente (Talt),

d) des constantes caractérisant le système d'entraînement du moteur,

en ce que la détermination de la période d'impulsions de tension de commande TV1, se composant du temps d'arrêt d'impulsion TV3 et du temps d'enclenchement d'impulsions (TV1-TV3) est basée, dans le cas d'une commutation s'effectuant avec utilisation du temps d'arrêt d'impulsion, sur la valeur temporelle Talt de la période de commutation précédente, et en ce que la durée TV2 de toutes les périodes d'impulsions de tension de commande placées entre deux instants de commutation, se composant du temps d'arrêt d'impulsions TV4 et du temps d'enclenchement d'impulsions (TV2-TV4), est déterminée avec la même valeur pour lesdites périodes, et en ce que les temps d'enclenchement et d'arrêt d'impulsions de la tension de commande pulsée sont déterminés d'après l'algorithme de régulation suivant :

$$TV1 = K1 + TV1alt + GI \times DT + P \times (DT\text{-}DTalt)$$
$$TV2 = K2 + A2 \times TV1$$
$$TV3 = K3 + A3 \times TV1$$
$$TV4 = K4 + A4 \times TV1,$$

où signifient :

DT Différence de temps entre une valeur temporelle correspondant à la vitesse de consigne et une valeur temporelle correspondant à la vitesse réelle pour la période de commutation actuelle T,

DTalt Différence de temps entre une valeur temporelle correspondant à la vitesse de consigne et une valeur temporelle correspondant à la vitesse réelle pour la période de commutation Talt précédant la période actuelle T,

TV1alt Période d'impulsions de tension de commande TV1 déjà calculée pour la période de commutation Talt précédant la période actuelle T.

G1 Facteur d'amplification,

P Facteur d'antériorité,

A2-A4 Facteurs d'atténuation,

K1-K4 Constantes du système d'entraînement de moteur,

TV1 Période d'impulsions de tension de commande se composant du temps d'arrêt d'impulsion TV3 et du temps d'enclenchement d'impulsions (TV1-TV3) pour une « dent de scie » du courant-moteur, formée par une décroissance et une croissance du courant et pour laquelle s'effectue la commutation lors de l'amorçage de la décroissance de courant,

TV3 Temps de décroissance de courant à l'intérieur de la période d'impulsions de tension de commande TV1,

TV2 Période d'impulsions de tension de commande se composant du temps d'arrêt d'impulsion TV4 et du temps d'enclenchement d'impulsion (TV2-TV4) pour une « dent de scie » du courant-moteur, formée par une décroissance et une croissance du courant sans commutation,

TV4 Temps de décroissance de courant à l'intérieur de la période d'impulsions de tension de commande TV2.

2. Procédé selon la revendication 1, caractérisé en ce que, lors du démarrage du moteur, la période d'impulsions de tension de commande TV1 est limitée à une valeur maximale prédéterminée.

3. Procédé selon l'une des revendications 1 et 2, caractérisé en ce que, dans le cas d'une variation lente de la charge du moteur, les impulsions de tension de commande sont prédéterminées de manière à obtenir une variation moyenne relativement petite du courant total de moteur.

4. Procédé selon l'une des revendications 1 et 2, caractérisé en ce que, dans le cas d'une variation rapide de la charge du moteur, les impulsions de tension de commande sont prédéterminées de façon à obtenir une variation moyenne relativement grande du courant total de moteur.

5. Procédé selon l'une des revendications 3 ou 4, caractérisé en ce que, pour une valeur moyenne inférieure du courant total de moteur ImitA, les limites inférieures de courant Imin prennent la valeur nulle.

6. Procédé selon l'une des revendications 3 ou 4, caractérisé en ce que, pour une très petite valeur moyenne du courant total de moteur ImitB, il existe entre une décroissance du courant-moteur se produisant à la valeur 0 et le début d'une croissance suivante du courant-moteur, un intervalle de temps > 0.

7. Procédé selon l'une des revendications précédentes 1 à 6, caractérisé en ce que l'écart de vitesse de rotation DT est déterminé comme une valeur moyenne de plusieurs périodes de commutation précédentes.

8. Appareillage pour la mise en œuvre du procédé selon l'une des revendications précédentes 1 à 7, caractérisé : en ce qu'il est prévu un micro-calculateur (100), qui peut recevoir les informations suivantes :

a) des signaux (IRQ), qui caractérisent les différents instants de commutation,

b) des signaux (FB1, FB2, FB3), qui caractérisent les différents échelons de commutation,

c) des signaux qui caractérisent la vitesse de consigne du moteur,

et en ce que dans le micro-calculateur est mémorisé un Tableau (Fig. 9), qui est parcouru cycliquement dans la séquence d'échelons de commutation du moteur, chaque échelon du Tableau contenant des indications pour une prédétermination des différents échelons de commutation et des signaux de commande correspondants pour le circuit-pilote du moteur, en ce que le micro-calculateur peut calculer, en tenant compte de la vitesse réelle du moteur pouvant être dérivée de la séquence de signaux IRQ et d'un algorithme de régulation conformément à la revendication 1, des temps d'enclenchement et d'arrêt d'impulsions (TV1-TV3, TV3 ; TV2-TV4, TV4) concernant la tension de commande pulsée pour les périodes d'impulsions avec et sans commutation, en ce que la tension de commande pulsée peut être prédéterminée en fonction du résultat d'une comparaison de ces temps calculés pour une addition avec le temps réel s'écoulant sous la commande d'un compteur, en ce que la fourniture de la tension de commande pulsée n'est effectuée que dans les temps des échelons de commutation, la fin d'un échelon de commutation dérivée du Tableau (Fig. 9) et déclenchée par une impulsion IRQ étant toujours retardée en correspondance à un temps d'arrêt d'impulsion de la tension de commande pulsée, et en ce que les signaux caractérisant les échelons de commutation déterminent l'emplacement du Tableau (Fig. 9) où doit commencer la séquence de commutation.

9. Appareillage selon la revendication 8, caractérisé en ce qu'il est prévu un compteur régressif (205) à commande synchronisée, pouvant être chargé avec les valeurs temporelles d'arrêt d'impulsions calculées et qui peut être excité par l'intermédiaire d'un circuit basculant (207) pouvant être sollicité par le micro-calculateur (100) à l'instant de commutation, en ce que le circuit basculant (207) peut être ramené à l'état initial après un comptage régressif du compteur (205), et en ce qu'il est prévu des portes ET (212, 213, 214) associées aux circuits pilotes de moteur, dont des premières entrées (219) sont reliées en commun à la sortie du circuit basculant (207) et dont des secondes entrées (215, 216, 217) peuvent être respectivement sollicitées par le micro-calculateur au moyen de signaux correspondant aux échelons de commutation.

10. Appareillage selon la revendication 8, caractérisé en ce que, dans le cas d'un asynchronisme entre les signaux IRQ et les signaux FB1, FB2 et FB3, il se produit une synchronisation automatique au moyen des valeurs prédéterminées par le Tableau (Fig. 9) du micro-calculateur pour la combinaison actuelle de signaux FB2, FB2, FB3.

11. Appareillage selon la revendication 8, caractérisé en ce que, dans le cas d'un asynchronisme trop fréquent entre les signaux IRQ et les signaux FB2, FB2 et FB3 ainsi que dans le cas d'une séquence erronée de signaux FB2, FB2, FB3 (par exemple dans le cas d'une marche arrière) ou bien dans le cas d'une combinaison de signaux FB1, FB2, FB3 qui n'est pas définie dans le Tableau (Fig. 9), il se produit un arrêt du moteur avec signalisation d'erreur.

FIG. 1

FIG. 2

FIG. 3

FIG. 4

FIG. 5

FIG. 6

## FIG. 7A

MECH.  0  30  60  90  120  150  180  210  240  270  300  330  360°
ELEK.  0  60  120  180  240  300  360  420  480  540  600  660  720°
KOMMUTIERGS.-SCHRITTE ① ② ③ ④ ⑤ ⑥ ① ② ③ ④ ⑤ ⑥ ①

FB1
FB2
FB3
IRQ   Zp-2  Zp-1  Zp

FB1 POSITIONSSIGNAL 1
FB2 POSITIONSSIGNAL 2
FB3 POSITIONSSIGNAL 3
IRQ ANFORDERUNGSSIGNALE FÜR KOMMUTIERUNG UND ZEITMESSUNG

## FIG. 7B

R
S
T
U
V
W

## FIG. 8

## FIG. 9

| SCHRITT | FB1 | FB2 | FB3 | R | S | T | U | V | W |
|---------|-----|-----|-----|---|---|---|---|---|---|
| ① | 1 | 0 | 0 | 1 | 0 | 0 | 0 | 1 | 0 |
| ② | 1 | 1 | 0 | 1 | 0 | 0 | 0 | 0 | 1 |
| ③ | 1 | 1 | 1 | 0 | 1 | 0 | 0 | 0 | 1 |
| ④ | 0 | 1 | 1 | 0 | 1 | 0 | 1 | 0 | 0 |
| ⑤ | 0 | 0 | 1 | 0 | 0 | 1 | 1 | 0 | 0 |
| ⑥ | 0 | 0 | 0 | 0 | 0 | 1 | 0 | 1 | 0 |

## FIG.10

STEUERSPANNUNGSPULSPERIODEN TV1 UND TV 2

TV1      TV2

TV3      TV4

(R,S,T) GEPULST

(U,V.W) NICHT GEPULST

KOMMUTIERUNGS- PERIODE T ODER T ALT

## FIG.11

I MAX

PC   I    PA     P.C

$\gamma$   $\delta$   $\alpha$   $\beta$   $\alpha$   $\beta$   $\gamma$   $\delta$

MOTORSUMMENSTROM

PB   I MIN

TV3   TV4   TV4   TV4   TV3

TV1   TV2   TV2   TV1

VERZÖGERTER KOMMUTIERUNGSZEITPUNKT

BEREICH DER KOMMUTIERUNGSANFORDERUNGEN

VERZÖGERTER KOMMUTIERUNGS- ZEITPUNKT

ZEIT t

## FIG. 12

106 LE   112 ≥ 1   IRQ   113   100 MCU   206 START   207 S FL R   208   218 1   219

107 TE

116

108 LE

115

109 TE

110 LE

114

111 TE

FB1   101

FB2   102

FB3   103

RUN   104A

S.D.B.   104B

209 AKTIV

211 TAKT   Z   B

204A LADEN

204B D.B.

205

210

212 & R

215

216 & S   213

217 & T   214

201 U

202 V

203 W

4

FIG. 13

FIG. 14

FIG. 15

5